# EUROPEAN PATENT APPLICATION

(11) **EP 4 614 390 A1**
(43) Date of publication of application: **10.09.2025**
(21) Application number: 24213885.7
(22) Date of filing: 19.11.2024
(51) Int. Cl.: G06N 3/045, G06F 12/00

(54) **TRANSFORMER ACCELERATION DEVICE AND OPERATION METHOD THEREOF**

(30) Priority: 04.03.2024 KR 20240030965
(71) Applicant: Samsung Electronics Co., Ltd., Suwon-si, Gyeonggi-do 16677 (KR); Naver Corporation, Seongnam-si, Gyeonggi-do 13561 (KR)
(72) Inventor: JEON, Younho, Suwon-si (KR); KIM, Chansoo, Suwon-si (KR); NA, Gitae, Suwon-si (KR); SON, Hong Rak, Suwon-si (KR); LEE, Hwang, Suwon-si (KR); JANG, Jae Hun, Suwon-si (KR); HEO, Wan, Suwon-si (KR); KWON, Se Jung, 13529 Seongnam-si (KR); KIM, Byeoung Wook, 13529 Seongnam-si (KR); PARK, Baeseong, 13529 Seongnam-si (KR); LEE, Dongsoo, 13529 Seongnam-si (KR)
(74) Representative: Marks & Clerk LLP

(57) **Abstract**

A transformer acceleration device configured to execute a transformer comprising a first plurality of decoder layers and a second plurality of decoder layers is disclosed. The transformer acceleration device comprises a first memory bank array configured to store a first plurality of weight matrices corresponding to the first plurality of decoder layers and a first plurality of key-value vector pairs corresponding to the second plurality of decoder layers, and a second memory bank array configured to store a second plurality of weight matrices corresponding to the second plurality of decoder layers, and a second plurality of key-value vector pairs corresponding to the first plurality of decoder layers.

## Description

### BACKGROUND

### (a) Field of the Invention

Some example embodiments relate to a transformer acceleration device which executes a transformer for generating an output token based on a plurality of input tokens. More specifically, some example embodiments relate to a transformer acceleration device which executes a transformer for generating an output token in an auto-regressive manner, and an operation method thereof.

### (b) Description of the Related Art

A transformer acceleration device generates an output token based on a plurality of input tokens. For example, based on a plurality of input tokens, the transformer acceleration device may execute a transformer to generate a first output token which is proper (e.g. predicted or likely) to follow the plurality of input tokens.

The transformer may operate in an auto-regressive manner. For example, the transformer may further use the first output token along with the plurality of input tokens to generate a second output token which is proper (e.g. predicted or likely) to follow the plurality of input tokens and the first output token. In other words, the transformer may sequentially operate over a plurality of iterations, and may use a result generated through each iteration as an input for the next iteration.

The transformer may reuse various types of data over the plurality of iterations. For example, the transformer may reuse data used in the previous iterations, in the next iteration. However, if the manner in which the transformer stores and reads data to be reused is not improved, or optimized, a bottleneck phenomenon may occur in the operation of the transformer acceleration device due to storing and reading of data to be reused.

### SUMMARY

Example embodiments are for solving the above-mentioned technical problem. More specifically, example embodiments provide a transformer acceleration device implemented to store and read data to be reused by a transformer with optimal, or improved, manner, and an operation method thereof.

A transformer acceleration device according to example embodiments may configured to execute a transformer comprising a first plurality of decoder layers and a second plurality of decoder layers. The transformer acceleration device may comprise a first memory bank array configured to store a first plurality of weight matrices corresponding to the first plurality of decoder layers and a first plurality of key-value vector pairs corresponding to the second plurality of decoder layers, and a second memory bank array configured to store a second plurality of weight matrices corresponding to the second plurality of decoder layers, and a second plurality of key-value vector pairs corresponding to the first plurality of decoder layers.

A transformer acceleration device according to example embodiments may be configured to operate based on a first activation vector corresponding to a first input token and may include a first memory bank array configured to store a first plurality of weight matrices, a second memory bank array configured to store a first plurality of preceding key-value vector pairs corresponding to a first plurality of preceding tokens for the first input token, a first processing circuit configured to generate a first key-value vector pair based on the first activation vector and the first plurality of weight matrices, and a second processing circuit configured to perform first attention calculation based on the first key-value vector pair and the first plurality of preceding key-value vector pairs.

An operation method of a transformer acceleration device including a plurality of memory bank arrays according to some example embodiments may include generating a first activation vector based on a first input token, reading a first plurality of weight matrices from a first memory bank array, the first memory bank array being a memory back array of the plurality of memory bank arrays, generating a first key-value vector pair based on the first plurality of weight matrices and the first activation vector, storing the first key-value vector pair in a second memory bank array, the second memory bank array being a memory bank array, of the plurality of memory bank arrays, different from the first memory bank array, generating a second activation vector based on the first key-value vector pair, and generating a first output token corresponding to the first input token based on the second activation vector.

At least some of the above and other features of the invention are set out in the claims.

### BRIEF DESCRIPTION OF THE DRAWINGS

FIG. 1 is a block diagram illustrating a transformer acceleration device according to some example embodiments.
FIG. 2 is a block diagram illustrating the transformer acceleration device of FIG. 1 in more detail.
FIG. 3 is a block diagram illustrating an operation of the transformer of FIG. 1.
FIG. 4 is a drawing illustrating the configuration of the transformer of FIG. 3 in more detail.
FIG. 5 is a drawing illustrating the configuration of a decoder layer of FIG. 4 in more detail.
FIG. 6 is a drawing illustrating the linear calculation of FIG. 5 in more detail.
FIG. 7 is a drawing illustrating the attention score calculation of FIG. 5 in more detail.
FIG. 8 is a drawing illustrating the attention vector calculation of FIG. 7 in more detail.
FIG. 9 is a drawing illustrating the operation of the transformer of FIG. 3 in more detail.
FIG. 10 is a drawing illustrating a memory bank which stores weight matrices and key-value vector pairs according to some example embodiments.
FIG. 11 is a drawing illustrating a bank collision with the first memory bank of FIG. 10.
FIG. 12 is a drawing illustrating the memory device of FIG. 2 according to some example embodiments.
FIG. 13 is a drawing illustrating the memory device of FIG. 2 according to some example embodiments.
FIG. 14 is a block diagram illustrating the memory device of FIG. 13 implemented according to some example embodiments.
FIG. 15 is a flow chart illustrating an operation method of the transformer acceleration device of FIG. 1 according to some example embodiments.
FIG. 16 is a flow chart illustrating operation S200 of FIG. 15 in more detail.
FIG. 17 is a flow chart illustrating operation S240 of FIG. 16 in more detail.
FIG. 18 is a block diagram illustrating a transformer acceleration device according to some example embodiments.
FIG. 19 is a block diagram illustrating the transformer acceleration device of FIG. 18 in more detail.
FIG. 20 is a block diagram illustrating an operation of the transformer of FIG. 18 according to some example embodiments.
FIG. 21 is a drawing illustrating the configuration of the transformer of FIG. 20 in more detail.
FIG. 22 is a drawing illustrating a linear calculation, which is performed by one of the decoder layers of FIG. 21, in more detail.
FIG. 23 is a drawing illustrating the memory device of FIG. 19 according to some example embodiments.
FIG. 24 is a block diagram illustrating the memory device of FIG. 23 implemented according to some example embodiments.
FIG. 25 is a block diagram illustrating the configuration of a transformer of FIG. 3 according to some example embodiments.
FIG. 26 is a drawing illustrating the configuration of a decoder layer of FIG. 25 in more detail.
FIG. 27 is a drawing illustrating a full-activation vector of FIG. 25 in more detail.
FIG. 28 is a drawing illustrating the linear calculation of FIG. 26.
FIG. 29 is a drawing illustrating the attention calculation of FIG. 26.
FIG. 30 is a drawing illustrating the transformer acceleration device of FIG. 1 or FIG. 18 implemented according to some example embodiments.
FIG. 31 is a drawing illustrating the transformer acceleration device of FIG. 1 or FIG. 18 implemented according to some example embodiments.

### DETAILED DESCRIPTION

Hereinafter, some example embodiments will be described clearly and in detail such that those skilled in the art can easily carry out the example embodiments. Details such as detailed components and structures are provided just to help an overall understanding of the example embodiments. Therefore, modifications of the example embodiments disclosed herein may be made by those skilled in the art, without departing from the inventive concepts and scope of the example embodiments. Further, descriptions of well-known functions and structures will not be made for clarity and conciseness. Components in the following drawings and detailed description may be connected to constituent elements other than components shown in the drawings or disclosed in the detailed description. Terms used herein are terms defined in the light of functions of the example embodiments, and are not limited to specific functions. Terms may be defined based on information disclosed in the detailed description.

Constituent elements which will described with reference to terms "driver", "block" or the like to be used in the detailed description may be implemented in a form of software, hardware, or a combination thereof. For example, software may be machine code, firmware, embedded code, and/or application software. For example, hardware may include electrical circuits, electronic circuits, processors, computers, integrated circuit cores, pressure sensors, inertial sensors, micro-electromechanical systems (MEMSs), passive devices, or combinations thereof.

It will be understood that elements and/or properties thereof may be recited herein as being "the same" or "equal" as other elements, and it will be further understood that elements and/or properties thereof recited herein as being "identical" to, "the same" as, or "equal" to other elements may be "identical" to, "the same" as, or "equal" to or "substantially identical" to, "substantially the same" as or "substantially equal" to the other elements and/or properties thereof. Elements and/or properties thereof that are "substantially identical" to, "substantially the same" as or "substantially equal" to other elements and/or properties thereof will be understood to include elements and/or properties thereof that are identical to, the same as, or equal to the other elements and/or properties thereof within manufacturing tolerances and/or material tolerances. Elements and/or properties thereof that are identical or substantially identical to and/or the same or substantially the same as other elements and/or properties thereof may be structurally the same or substantially the same, functionally the same or substantially the same, and/or compositionally the same or substantially the same.

It will be understood that elements and/or properties thereof described herein as being "substantially" the same and/or identical encompasses elements and/or properties thereof that have a relative difference in magnitude that is equal to or less than 10%. Further, regardless of whether elements and/or properties thereof are modified as "substantially," it will be understood that these elements and/or properties thereof should be construed as including a manufacturing or operational tolerance (e.g., ±10%) around the stated elements and/or properties thereof.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.Further, regardless of whether numerical values or shapes are modified as "about" or "substantially," it will be understood that these values and shapes should be construed as including a manufacturing or operational tolerance (e.g., ±10%) around the stated numerical values or shapes.

As used herein, such terms as "1st" and "2nd", or "first" and "second" may be used to simply distinguish a corresponding component from another, and do not necessarily limit the components in other aspect (e.g., importance or order). For instance, the terms first processing circuit and second processing circuit may be used to distinguish two different processing circuits, but need not imply any particular order or importance.

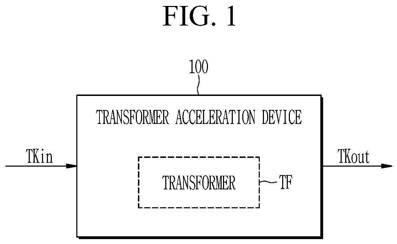

FIG. 1 is a block diagram illustrating a transformer acceleration device according to some example embodiments. Referring to FIG. 1, a transformer acceleration device 100 may receive one or more input tokens TKin, and may output an output token TKout. For example, the transformer acceleration device 100 may execute a transformer TF. Based on one or more input tokens TKin, the transformer TF may generate an output token TKout proper to follow the one or more input tokens TKin.

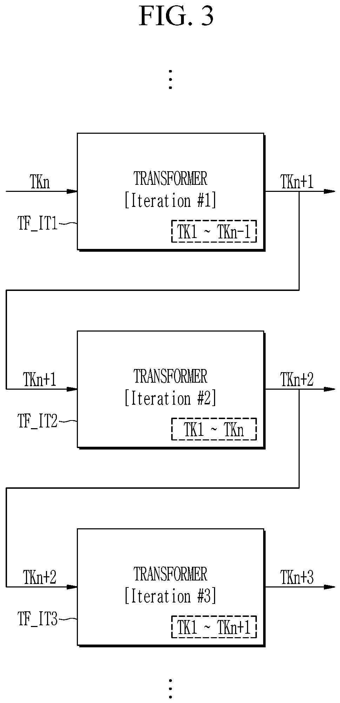

The transformer TF may operate with auto-regressive manner. For example, based on the generated output token, the transformer TF may generate a token to follow the output token TKout. In this manner, whenever the transformer TF executes one iteration (i.e., one operation cycle), the transformer TF may generate one output token TKout. In this manner, the transformer TF may sequentially generate a plurality of output tokens TKout by sequentially executing a plurality of iterations. A detailed operation manner of the transformer TF will be described in more detail with reference to the following FIG. 3.

In some example embodiments, the transformer acceleration device 100 may be used to implement a natural language processing model, such as a language model (e.g. a large language model (LLM)). For example, based on a plurality of input tokens TKin, the transformer acceleration device 100 may predict an output token TKout to follow the plurality of input tokens TKin. The output token TKout may be a token that is deemed to be most likely (e.g. that is deemed to be proper) to follow the plurality of input tokens TKin. However, the scope of the inventive concepts is not limited to the type of a specific model in which the transformer acceleration device 100 is used. For example, the transformer acceleration device 100 may be used to implement any type of artificial intelligence model, such as an image generation model, a translation model, etc. For instance, for an image generation model, the input tokens may represent image data (e.g. may be embeddings of sections or patches of image data) and the output tokens may be predicted tokens representing image data (e.g. may be embeddings of predicted sections or patches of image data). The image generation model may generate later images in a sequence (e.g. video data), and/or may complete or expand an in input image. The output tokens may be decoded to produce a predicted image. In a translation model, input tokens representing a language sequence in on language may be translated into output tokens representing the language sequence in another language. Nevertheless, hereinafter, for a more brief explanation, some example embodiments in which the transformer acceleration device 100 is used to implement an LLM will be described as a representative examples.

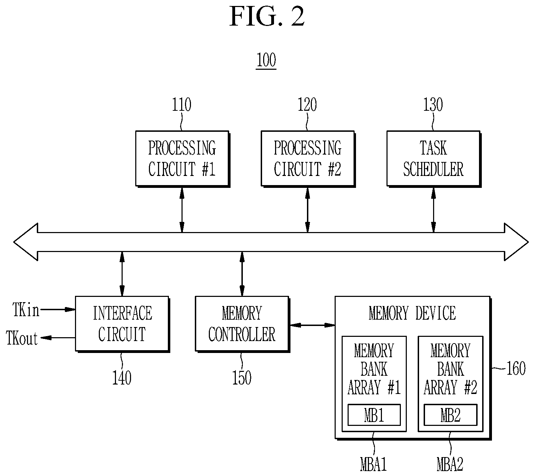

FIG. 2 is a block diagram illustrating the transformer acceleration device of FIG. 1 in more detail. Referring to FIGS. 1 and 2, the transformer acceleration device 100 may include a first processing circuit 110, a second processing circuit 120, a task scheduler 130, an interface circuit 140, a memory controller 150, and/or a memory device 160. The first processing circuit 110, the second processing circuit 120, the task scheduler 130, the interface circuit 140, the memory controller 150, and/or the memory device 160 may be connected to one another through a bus.

The first processing circuit 110 and the second processing circuit 120 may perform different types of tasks, respectively. The first processing circuit 110 and the second processing circuit 120 may be implemented as dedicated hardware improved, or optimized, for performing different types of calculations, respectively. For example, the first processing circuit 110 may be a dedicated hardware for performing linear calculations, and the second processing circuit 120 may be a dedicated hardware for performing attention calculations. The types of specific calculations which are performed by each of the processing circuits will be described in more detail with reference to the following drawings.

In some example embodiments, the first processing circuit 110 and the second processing circuit 120 may be implemented as processing cores included in different types of processing units, respectively, or may be implemented as different types of processing cores included in single processing unit. However, example embodiments are not limited thereto, and the first processing circuit 110 and the second processing circuit 120 may also be the same type of processing cores. In other words, example embodiments are not limited to the specific implementation method of the first processing circuit 110 and the second processing circuit 120. More generally, the first processing circuit 110 and the second processing circuit 120 may form part of processing circuitry of the transformer acceleration device.

The task scheduler 130 may control the overall operation of the transformer acceleration device 100. For example, the task scheduler 130 may allocate tasks or calculations required, or sufficient, to drive the transformer TF to the first processing circuit 110 and the second processing circuit 120.

For a more brief explanation, in FIG. 2, the task scheduler 130 is shown as a separate constituent element from the first processing circuit 110 and the second processing circuit 120; however, example embodiments are not limited thereto. For example, the task scheduler 130 may be configured as separate hardware from the first processing circuit 110 and the second processing circuit 120, or may be implemented as software which is executed in the first processing circuit 110, the second processing circuit 120, or any other processing circuit.

The interface circuit 140 may support interfacing with external devices. For example, the interface circuit 140 may receive the one or more input tokens TKin from an external device, and may output the one or more output tokens TKout to the external device.

In some example embodiments, the interface circuit 140 may perform communication with external devices based on various types of communication interfaces such as peripheral component interconnect express (PCIe), double data rate (DDR), and the like. However, example embodiments are not limited to the specific operation manner of the interface circuit 140.

The memory controller 150 may control the memory device 160 under the control of the first processing circuit 110, the second processing circuit 120, and/or the task scheduler 130. For example, the memory controller 150 may store data in the memory device 160 and/or read data stored in the memory device 160.

The memory device 160 may serve as an operation memory for the transformer acceleration device 100. For example, the memory device 160 may store data to be reused over a plurality of iterations by the transformer TF. More specifically, the memory device 160 may store data that will be used repeatedly in calculations to be performed by the first processing circuit 110 and/or the second processing circuit 120.

In some example embodiments, the memory device 160 may store weight matrices and key-value vector pairs which are used in decoder layers included in the transformer TF.

In some example embodiments, the memory device 160 may be a dynamic random access memory (DRAM). However, example embodiments are not limited to a specific type of memory device 160.

The memory device 160 may include a first memory bank array MBA1 and/or a second memory bank array MBA2. Each, or one or more, of the first memory bank array MBA1 and the second memory bank array MBA2 may include one or more memory banks. For example, the first memory bank array MBA1 may include a first memory bank MB1, and the second memory bank array MBA2 may include a second memory bank MB2.

Each, or one or more, of the memory banks included in the first memory bank array MBA1 and the second memory bank array MBA2 may operate independently for each other. For example, each, or one or more of the first memory bank MB1 and the second memory bank MB2 may include a sense amplifier circuit. Accordingly, one of memory cell rows included in the first memory bank MB1 may be activated simultaneously as one of memory cell rows included in the second memory bank MB2. In this case, while the first processing circuit 110 performs a read operation on the first memory bank MB1, the second processing circuit 120 may perform a read operation on the second memory bank MB2.

The memory device 160 may store data to be reused by the first processing circuit 110 and the second processing circuit 120 over a plurality of iterations of the transformer TF. This avoids the first processing circuit 110 and the second processing circuit 120 having to recalculate the data in each iteration. By storing this data for reuse, the amounts of calculation of the first processing circuit 110 and the second processing circuit 120 in subsequent iterations may be reduced, or minimized, and accordingly, the speed of operation of the transformer acceleration device 100 may be improved.

In some example embodiments, the memory device 160 may store data to be reused over a plurality of iterations, in the training stage of the transformer TF in advance, or may store them in advance while the transformer TF performs more preceding iterations. That is, the stored data may be calculated during training and then stored for later use over the plurality of iterations, or may be calculated in one or more preceding iterations (e.g. during interference) and stored for later use over the plurality of iterations.

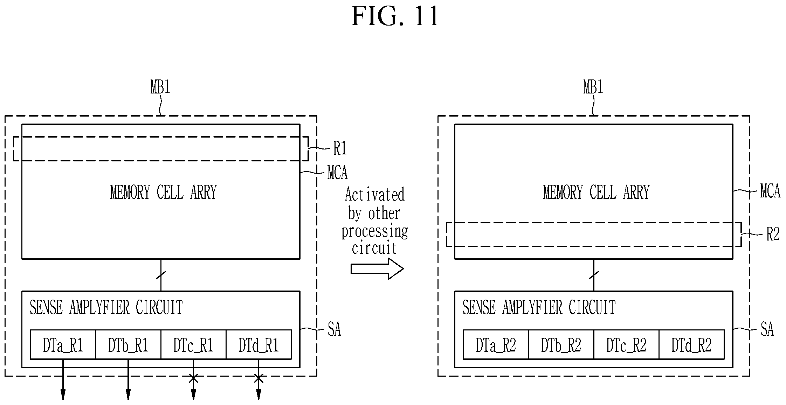

When the first processing circuit 110 and the second processing circuit 120 access one memory bank simultaneously, a bank collision phenomenon may occur. For example, when the first processing circuit 110 and the second processing circuit 120 accesses different rows of the first memory bank MB1 simultaneously (e.g., they perform read operations on different rows at the same time), the reading operation for the data stored in the first memory bank MB1 may be delayed. In a more detailed example, when the second processing circuit 120 activates a second row of the first memory bank MB1 while the first processing circuit 110 is performing a read operation after activating a first row of the first memory bank MB1, the first processing circuit 110 may need to reactivate the first row of the first memory bank MB1 to perform a read operation. In this case, data reading of the first processing circuit 110 for the first memory bank MB1 may be delayed. The bank collision will be described in more detail with reference to the following FIG. 11.

The task scheduler 130 may dispersedly allocate data likely to be accessed simultaneously by the first processing circuit 110 and the second processing circuit 120, to different memory bank array.

The memory device 160 may dispersedly store data likely to be accessed simultaneously by the first processing circuit 110 and the second processing circuit 120, in different memory bank array. For example, the memory device 160 may store some of the data likely to be accessed simultaneously in the first memory bank array MBA1, and may store the other data in the second memory bank array MBA2. In a more detailed example, the memory device 160 may store some of the data likely to be accessed simultaneously in the first memory bank MB1, and may store the other data in the second memory bank MB2. In this case, a bank collision which is caused by simultaneous accessing of the first processing circuit 110 and the second processing circuit 120 can be reduced, or prevented. A specific manner in which the memory device 160 dispersedly stores data likely to be simultaneously accessed in different memory bank arrays will be described in more detail with reference to the following drawings.

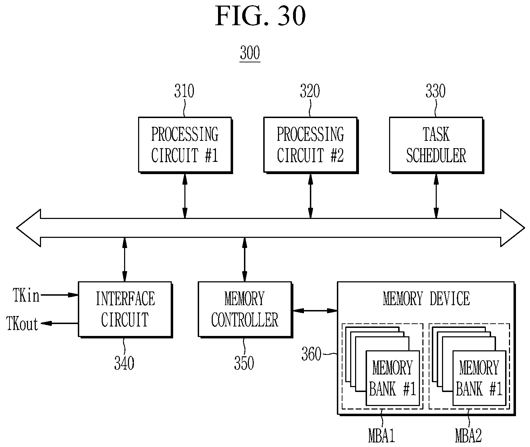

Hereinafter, for a more brief explanation, some example embodiments in which the memory device 160 dispersedly stores data, likely to be accessed simultaneously, in the first memory bank MB1 and the second memory bank MB2 will be described as a representative example. However, example embodiments are not limited thereto, and the memory device 160 may dispersedly store some of the data, likely to be accessed simultaneously, in a plurality of memory banks included in the first memory bank array MBA1; and the memory device 160 may dispersedly store the other data in a plurality of memory banks included in the second memory bank array MBA2. A manner in which the memory device 160 dispersedly stores data in a plurality of memory banks included in the first memory bank array MBA1 and the second memory bank array MBA2 will be described in more detail with reference to the following FIG. 30.

In some example embodiments, the memory device 160 may dispersedly store weight matrices and key-value vector pairs, which are related to same decoder layer included in the transformer TF, in different memory bank arrays. In this case, even if the weight matrices and the key-value vector pairs are accessed simultaneously while the transformer TF is operating, the bank collision phenomenon may be reduced, or prevented.

FIG. 3 is a block diagram illustrating an operation of the transformer of FIG. 1. Referring to FIGS. 1 to 3, the transformer TF may sequentially operate over a plurality of iterations. Hereinafter, the operation of the transformer performing first to third iterations TF_IT1 to TF_IT3, where the first to third iterations are consecutive, will be described as a representative example.

Hereinafter, for a more brief explanation, it is assumed that an n-th token TKn has been generated by a summarization stage of the transformer TF, and it is assumed that first to third iterations are included in a generation stage. For example, hereinafter, it is assumed that a token stream including first to (n-1)-th tokens TK1 to TKn-1 has been provided from the outside of the transformer acceleration device 100 (e.g. by another device), and the n-th token TKn has been generated by performing a 0-th iteration, which precedes the first iteration, based on the token stream. However, example embodiments are not limited thereto.

The transformer TF may perform a plurality of iterations in an auto-regressive manner. The transformer TF may generate one output token TKout whenever each of the plurality of iterations is performed. When performing one iteration, the transformer TF may use an output token TKout generated by the previous iteration as an input token TKin.

In a more detailed example, the transformer performing a first iteration TF_IT1 (e.g. an (n+1)-th iteration) may generate an (n+1)-th token TKn+1 by using the n-th token TKn generated by the iteration preceding the first iteration (e.g., the n-th iteration, such as the 0-th iteration), as an input token TKin. Similarly, the transformer performing a second iteration TF_IT2 (e.g. an (n+2)-th iteration) may generate a (n+2)-th token TKn+2 by using the (n+1)-th token TKn+1 as an input token TKin; and the transformer performing a second iteration TF_IT3 (e.g. an (n+3)-th iteration) may generate a (n+3)-th token TKn+3 by using the (n+2)-th token TKn+2 as an input token TKin. The number of iterations may vary. Accordingly, more than three, or less than three iterations may be performed.

In this manner, the transformer acceleration device 100 may sequentially generate a plurality of tokens by executing the transformer TF over the plurality of iterations. In this case, the plurality of token generated by the transformer TF may form one token sequence together with the token stream provided from an external device (e.g., the first to (n-1)-th tokens TK1 to TKn-1). For example, the first to (n+2)-th tokens TK1 to TKn+2 may form one token sequence. The token sequence may include the tokens provided as an input (e.g. the first to (n-1)-th tokens TK1 to TKn-1) and the tokens generated over the plurality of iterations (e.g. the n-th to (n+2)-th tokens TKn to TKn+2).

In some example embodiments, when the transformer acceleration device 100 is used to implement an LLM, the token sequence may correspond to one or more sentences. However, example embodiments are not limited thereto.

In some example embodiments, the maximum length of a token sequence may be predetermined, or alternately given. For example, the maximum length of a token sequence may be predetermined, or alternately given, according to the number of tokens which the transformer TF can process at single time.

In some example embodiments, in one token sequence, tokens preceding a specific token may be referred to as "preceding tokens for the specific token". For example, the first to (n-1)-th tokens TK1 to TKn-1 may be referred to as preceding tokens for the n-th token TKn; and the first to (n+1)-th tokens TK1 to TKn+1 may be referred to as preceding tokens for the (n+2)-th token TKn+2.

When performing one iteration, a transformer TF may generate an output token TKout based on an input token TKin and preceding tokens for the input token TKin. For example, the transformer performing a first iteration TF_IT1 may generate the (n+1)-th token TKn+1 based on the n-th token TKn and the first to (n-1)-th tokens TK1 to TKn-1. Similarly, the transformer performing a second iteration TF_IT2 may generate a (n+2)-th token TKn+2 based on the (n+1)-th token TKn+1 and the first to n-th tokens TK1 to TKn.

Therefore, when the transformer TF performs any iteration, the calculation results for a plurality of tokens used in performing preceding iterations may be required, or sufficient, repeatedly. Accordingly, when the transformer TF performs any iterations, the transformer TF may reuse calculation results for a plurality of tokens used in performing preceding iterations. For example, the transformer performing a first iteration TF_IT1 (e.g. an (n+1)-th iteration) may reuse the calculation results for the first to (n-1)-th tokens TK1 to TKn-1; and the transformer performing a second iteration TF_IT2 (e.g. an (n+2)-th iteration) may reuse the calculation results for the first to n-th tokens TK1 to TKn.

More specifically, each transformer TF which performs an iteration may store the calculation results for an input token TKin in the memory device 160. In this case, the amount of calculation for the transformer TF performing subsequent iterations may be reduced, or minimized. Hereinafter, the operation of a transformer TF during each iteration will be described.

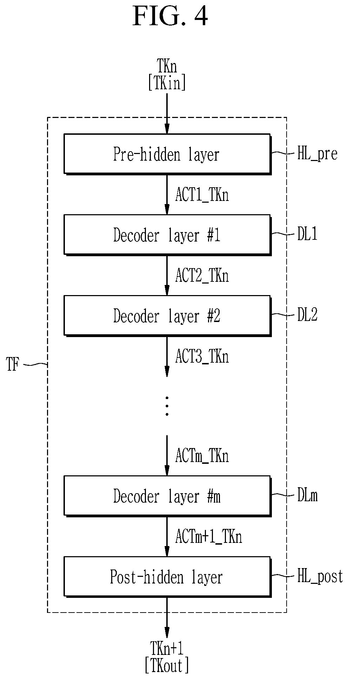

In some example embodiments, the calculation results for tokens may include a key-value vector pair. The key-value vector pair will be described in more detail with reference to the following FIGS. 4 to 9.

First, before performing the first iteration (e.g., while performing the 0-th iteration), the transformer TF may store the result of calculation for the preceding tokens for the n-th token TKn (i.e., the first to (n-1)-th tokens TK1 to TKn-1) in the memory device 160.

Thereafter, the transformer performing the first iteration TF_IT1 may read the calculation results for the first to (n-1)-th tokens TK1 to TKn-1 stored in the memory device 160; and may generate calculation results for the n-th token TKn. In this case, the transformer performing a first iteration TF_IT1 may generate the (n+1)-th token TKn+1 without performing calculations for the first to (n-1)-th tokens TK1 to TKn-1 to obtain the calculation results. Meanwhile, the transformer performing a first iteration TF_IT1 may further store the calculation result for the n-th token TKn in the memory device 160.

Thereafter, the transformer performing a second iteration TF_IT2 may read the result of the calculation for the first to n-th tokens TK1 to TKn stored in the memory device 160, and generate the result of calculations for the (n+1)-th token TKn+1. In this case, the transformer performing a second iteration TF_IT2 may generate the (n+2)-th token TKn+2 without performing calculations for the first to n-th tokens TK1 to TKn to obtain the calculation results. Meanwhile, the transformer performing a second iteration TF_IT2 may further store the calculation result for the (n+1)-th token TKn+1 in the memory device 160.

In this manner, the transformer performing the third iteration TF_IT3 may read the results of calculations for the first to (n+1)-th tokens TK1 to TKn+1 from the memory device 160, and store the results of calculations for the (n+2)-th token TKn+2 in the memory device 160.

In other words, according to some example embodiments, while performing each iteration, a transformer TF may read calculation results corresponding to preceding tokens for the output token TKout of the previous iteration, from the memory device 160. Thereafter, the transformer TF may generate calculation results corresponding to the output token TKout of the previous iteration and store it in the memory device 160.

FIG. 4 is a drawing illustrating the configuration of a transformer of FIG. 3 in more detail. Hereinafter, the configuration and operation of the transformer performing the first iteration will be described as a representative example with reference to FIGS. 1 to 4. However, example embodiments are not limited thereto, and transformers TF which performs other iterations may be implemented in a similar manner.

The transformer TF may include a pre-hidden layer HL_pre, first to m-th decoder layers DL1 to DLm, and/or a post-hidden layer HL_post. A pre-hidden layer HL_pre may be an input layer, that takes an input and generates a hidden vector. A post-hidden layer HL_post may be an output layer that takes a hidden vector (e.g. an activation vector) and generates an output.

Based on an input token TKin, the pre-hidden layer HL_pre may generate an activation vector corresponding to the input token TKin. For example, based on the n-th token TKn, the pre-hidden layer HL_pre may generate an activation vector ACT1_TKn related to the n-th token TKn. As described herein, an activation vector may be the result of an activation function for a particular layer. The layer may receive input data (e.g. a vector) and input the data into the activation function to generate the activation vector. The activation vector may be output (e.g. as the input to a subsequent layer). The activation function may be dependent on weights of the layer. The weights may be determined during training.

In some example embodiments, the pre-hidden layer HL_pre may perform various types of token processing operations such as a token embedding operation, a positional encoding operation, and the like.

The first to m-th decoder layers DL1 to DLm may generate an activation vector ACTm+1_TKn by sequentially converting the activation vector ACT1_TKn. For example, the first decoder layer DL1 may generate an activation vector ACT2_TKn based on the activation vector ACT1_TKn; and the second decoder layer DL2 may generate an activation vector ACT3_TKn based on the activation vector ACT2_TKn. In a similar manner, the m-th decoder layer DLm may generate the activation vector ACTm+1_TKn based on an activation vector ACTm_TKn.

In some example embodiments, the dimensions of the activation vector ACT1_TKn to the activation vector ACTm+1_TKn may be same each other. For example, each, or one or more, of the activation vector ACT1_TKn to the activation vector ACTm+1_TKn may include the same number of elements.

The first to m-th decoder layers DL1 to DLm may generate different calculation results for an input token TKin (e.g., the n-th token TKn), respectively. For example, the first to m-th decoder layers DL1 to DLm may calculate different key-value vector pairs corresponding to the n-th token TKn, respectively.

Each, or one or more, of the first to m-th decoder layers DL1 to DLm may generate an activation vector based on a generated key-value vector pair. For example, the first decoder layer DL1 may generate the activation vector ACT2_TKn based on the generated key-value vector pair.

Each, or one or more, of the first to m-th decoder layers DL1 to DLm may store the generated key-value vector pair in the memory device 160. In this case, when the transformer TF performs subsequent iterations (e.g., the second iteration and/or the third iteration in FIG. 3), the transformer TF may not need to calculate a key-value vector pair corresponding to the n-th token TKn for each, or one or more, of the first to m-th decoder layers DL1 to DLm.

When the first iteration is being performed, the first to m-th decoder layers DL1 to DLm may read out key-value vector pairs from the memory device 160, which are corresponding to preceding tokens for the input token TKin and corresponding to the first to m-th decoder layers DL1 to DLm respectively. Therefore, the first to m-th decoder layers DL1 to DLm may generate an activation vector without calculating key-value vector pairs for the first to (n-1)-th tokens TK1 to TKn-1.

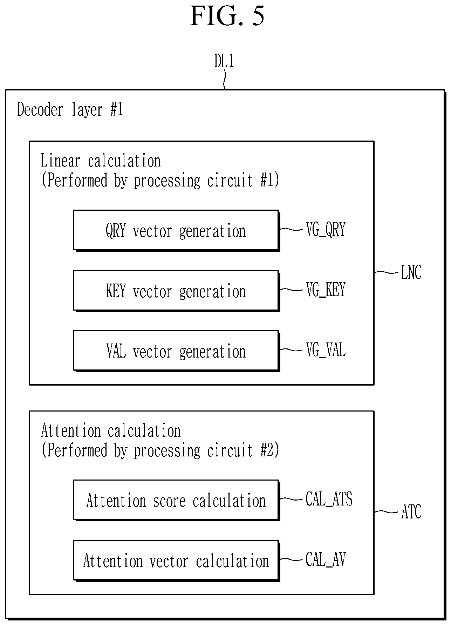

The configuration and operation of each, or one or more, of the first to m-th decoder layers DL1 to DLm will be described in more detail with reference to the following FIGS. 5 to 9.

The post-hidden layer HL_post may calculate an output token TKout (e.g, the (n+1)-th token TKn+1) based on the activation vector ACTm+1_TKn.

In some example embodiments, the post-hidden layer HL_post may perform various types of vector processing operations such as a layer normalizing operation, a fully-connected network computation operation, and the like.

In some example embodiments, an activation vector ACTi_TKj may refer to an activation vector which corresponds to a j-th token TKj and being provided to an i-th decoder layer (wherein i is an integer equal to or greater than 1, and equal to or smaller than m).

In some example embodiments, an activation vector ACTm+1_TKj may refer to an activation vector which corresponds to the j-th token TKj and being provided to the post-hidden layer HL_post.

FIG. 5 is a drawing illustrating the configuration of a decoder layer of FIG. 4 in more detail. Hereinafter, the configuration and operation of the first decoder layer DL1 will be described as a representative example with reference to FIGS. 1 to 5. However, example embodiments are not limited thereto, and the second to m-th decoder layers DL2 to DLm may be implemented in a similar manner.

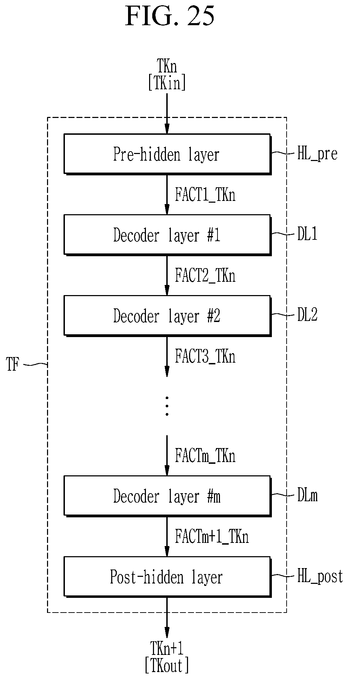

Hereinafter, an operation related to one head executing the first decoder layer DL1 will be described. The operation of the first decoder layer DL1 which may be performed in a multi-head manner will be described in more detail with reference to the following FIGS. 25 to 29. However, example embodiments are not limited to the specific manner in which the first decoder layer DL1 is executed.

The first decoder layer DL1 may include linear calculation LNC and/or attention calculation ATC. The linear calculation LNC may be performed by the first processing circuit 110. Therefore the first processing circuit 110 may be a linear calculation processing circuit. The attention calculation ATC may be performed by the second processing circuit 120. Therefore the second processing circuit 120 may an attention calculation processing circuit.

The linear calculation LNC may include query vector generation VG_QRY, key vector generation VG_KEY, and/or value vector generation VG_VAL. In other words, the first processing circuit 110 may generate query vectors QRY, key vectors KEY, and/or value vectors VAL.

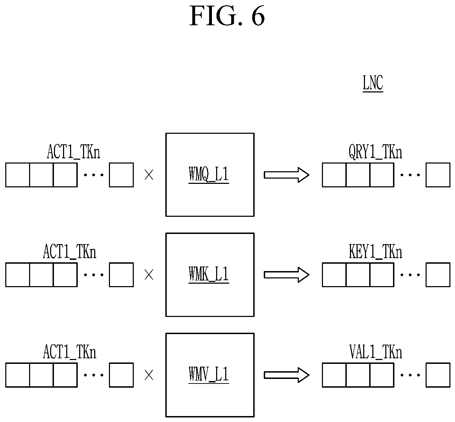

In some example embodiments, the first processing circuit 110 may calculate a query vector QRY, a key vector KEY, and/or a value vector VAL based on results obtained by multiplying an activation vector provided to the first decoder layer DL1 (e.g., the activation vector ACT1_TKn) with different weight matrices. A manner in which the first processing circuit 110 calculates a query vector QRY, a key vector KEY, and/or a value vector VAL will be described in more detail with reference to the following FIG. 6.

The attention calculation ATC may include attention score calculation CAL_ATS and/or attention vector calculation CAL_AV. In other words, the second processing circuit 120 may calculate an attention score ATS and/or an attention vector AV by performing an attention operation.

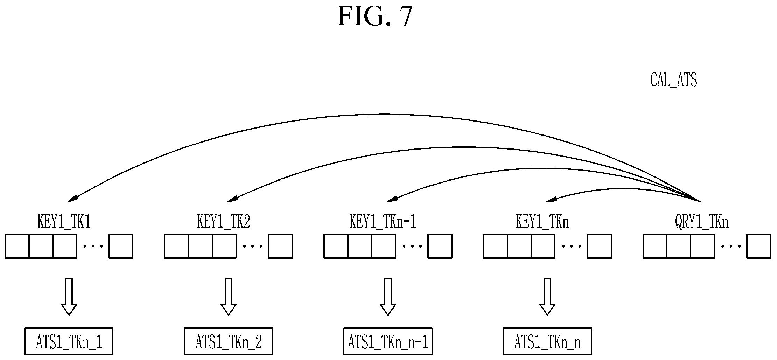

In some example embodiments, the second processing circuit 120 may calculate a plurality of attention scores ATS based on query vectors QRY and/or key vectors KEY. For example, based on a query vector QRY, the second processing circuit 120 may calculate a plurality of attention scores ATS corresponding to a key vector KEY corresponding to an input token TKin and/or key vectors corresponding to preceding tokens for the input token TKin. A manner in which the second processing circuit 120 calculates a plurality of attention scores ATS will be described in more detail with reference to the following FIG. 7.

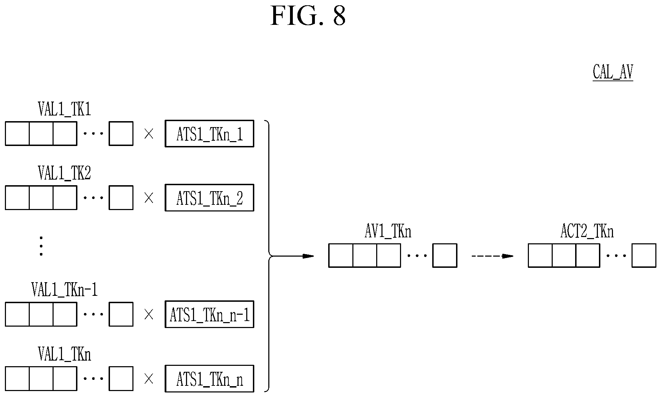

In some example embodiments, the second processing circuit 120 may calculate an attention vector AV based on a plurality of attention scores ATS and/or value vectors VAL. For example, based on a plurality of attention scores ATS, the second processing circuit 120 may calculate an attention vector AV by accumulating value vectors VAL corresponding to the input token TKin and value vectors corresponding to preceding tokens for the input token TKin. A manner in which the second processing circuit 120 calculates an attention vector AV will be described in more detail with reference to the following FIG. 8.

FIG. 6 is a drawing illustrating the linear calculation of FIG. 5 in more detail. In other words, hereinafter, some example embodiments in which the first decoder layer DL1 performs linear calculation LNC corresponding to the n-th token TKn will be described as a representative example with reference to FIGS. 1 to 6.

The first processing circuit 110 may read a first query weight matrix WMQ_L1, a first key weight matrix WMK_L1, and/or a first value weight matrix WMV_L1 stored in the memory device 160.

In some example embodiments, weight matrices which a transformer TF uses for linear calculation LNC of different decoder layers DL may be different from each other. Hereinafter, for a more brief explanation, an i-th query weight matrix WMQ_Li may refer to a weight matrix which is used in query vector generation VG_QRY of an i-th decoder layer DLi; and an i-th key weight matrix WMK_Li may refer to a weight matrix which is used in key vector generation VG_KEY of the i-th decoder layer DLi; and an i-th value weight matrix WMV_Li may refer to a weight matrix which is used in value vector generation VG_VAL of the i-th decoder layer DLi.

The first processing circuit 110 may generate a query vector QRY1_TKn based on a result obtained by multiplying the first query weight matrix WMQ_L1 with the activation vector ACT1_TKn.

In some example embodiments, a query vector QRYi_TKj may refer to a query vector corresponding to the j-th token TKj which is generated in the i-th decoder layer DLi.

The first processing circuit 110 may generate a key vector KEY1_TKn based on a result obtained by multiplying the first key weight matrix WMK_L1 with the activation vector ACT1_TKn.

In some example embodiments, a key vector KEYi_TKj may refer to a key vector corresponding to the j-th token TKj which is generated in the i-th decoder layer DLi.

The first processing circuit 110 may generate a value vector VAL1_TKn based on a result obtained by multiplying the first value weight matrix WMV_L1 with the activation vector ACT1_TKn.

In some example embodiments, a value vector VALi_TKj may refer to a value vector corresponding to the j-th token TKj which is generated in the i-th decoder layer DLi.

Weight matrices, which the transformer TF uses in linear calculation LNC of first decoder layers DL1 included in a plurality of iterations respectively, may be the same as each other. For example, the first query weight matrix WMQ_L1, the first key weight matrix WMK_L1, and/or the first value weight matrix WMV_L1 may be reused over a plurality of iterations.

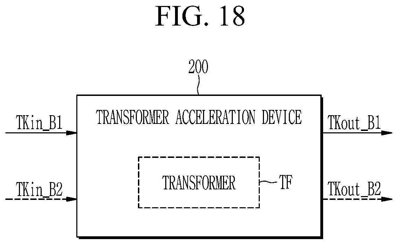

In some example embodiments, the transformer TF may perform linear calculation LNC for a plurality of token streams together (e.g., collectively). For example, the transformer TF may perform a plurality of linear calculations LNC for token streams provided from different users, with a batch scheme. A manner in which the transformer TF performs a plurality of linear calculations LNC on a plurality of token streams with a batch scheme will be described in more detail with reference to the following FIGS. 18 to 24.

FIG. 7 is a drawing illustrating the attention score calculation of FIG. 5 in more detail. In other words, hereinafter, the operation of the first decoder layer DL1 which performs attention score calculation CAL_ATS corresponding to the n-th token TKn will be described as a representative example with reference to FIGS. 1 to 7.

The second processing circuit 120 may generate attention scores ATS1_TKn_1 to ATS1_TKn_n, which are respectively corresponding to the n-th token TKn and preceding tokens for the n-th token (e.g., the first to (n-1)-th tokens TK1 to TKn-1), based on the query vector QRY1_TKn. For example, the second processing circuit 120 may calculate the attention score ATS1_TKn_1 based on the dot product of the query vector QRY1_TKn and the key vector KEY1_TK1, and may calculate attention score ATS1_TKn_2 based on the dot product of the query vector QRY1_TKn and the key vector KEY1_TK2. In similar manner, the second processing circuit 120 may calculate the attention score ATS1_TKn_n based on the dot product of the query vector QRY1_TKn and the key vector KEY1_TKn. That is, for each token of the first to n-th tkens TK1 to TKn, the second processing circuit 120 may calculate an attention score based on the dot product of the key vector for that token and the query vector QRY1_TKn. In this case, key vectors KEY1_TK1 to KEY1_TKn-1 corresponding to preceding tokens for the n-th token TKn (hereinafter, it will be also referred to as preceding key vectors) may have been calculated by preceding iterations (e.g., the 0-th iteration) in advance.

In some example embodiments, an attention score ATSi_TKj_k may refer to an attention score corresponding to the j-th token TKj and a k-th token TKk which are generated in the i-th decoder layer DLi. For example, the attention score ATSi_TKj_k may indicate the correlation between the j-th token TKj and the k-th token TKk.

In other words, in order to perform attention score calculation CAL_ATS, the second processing circuit 120 may need not only the key vector KEY related to the input token TKin but also preceding key vectors. Accordingly, the second processing circuit 120 may store calculated key vectors in the memory device 160 and thereafter reuse them. For example, while the transformer TF performs the first iteration, the first decoder layer DL1 may store the key vector KEY1_TKn in the memory device 160. In this case, while the transformer TF performs the second iteration, the second processing circuit 120 may reuse the key vector KEY1_TKn stored in the memory device 160, in performing attention score calculation CAL_ATS.

FIG. 8 is a drawing illustrating the attention vector calculation of FIG. 7 in more detail. In other words, hereinafter, the operation of the first decoder layer DL1 which performs attention vector calculation CAL_AV corresponding to the n-th token TKn will be described as a representative example with reference to FIGS. 1 to 8.

The second processing circuit 120 may perform attention vector calculation CAL_AV for the n-th token TKn based on attention scores ATS and value vectors VAL corresponding to the n-th token TKn and preceding tokens thereto (e.g., the first to (n-1)-th tokens TK1 to TKn-1), respectively. For example, the second processing circuit 120 may generate the attention vector AV1_TKn based on accumulating (e.g. summing) vectors obtained by respectively multiplying value vectors VAL1_TK1 to VAL1_TKn and the attention scores ATS1_TKn_1 to ATS1_TKn_n. In this case, the value vectors VAL1_TK1 to VAL1_TKn-1 corresponding to the preceding tokens (hereinafter, also referred to as the preceding value vectors) may have been calculated by the preceding iterations (e.g., the 0-th iteration) in advance.

In other words, in order to perform attention vector calculation CAL_AV, the second processing circuit 120 may need not only the value vector VAL related to the input token TKin but also preceding value vectors. Accordingly, the second processing circuit 120 may store calculated value vectors in the memory device 160, and thereafter reuse them. For example, while the transformer TF performs the first iteration, the first decoder layer DL1 may store the value vector VAL1_TKn in the memory device 160. In this case, while the transformer TF performs the second iteration, the second processing circuit 120 may reuse the value vector VAL1_TKn stored in the memory device 160 in performing attention vector calculation CAL_AV.

In some example embodiments, the first decoder layer DL1 may generate the activation vector ACT2_TKn by converting the attention vector AV1_TKn based on various types of vector processing algorithms such as residual calculation, a feed forward network, and the like.

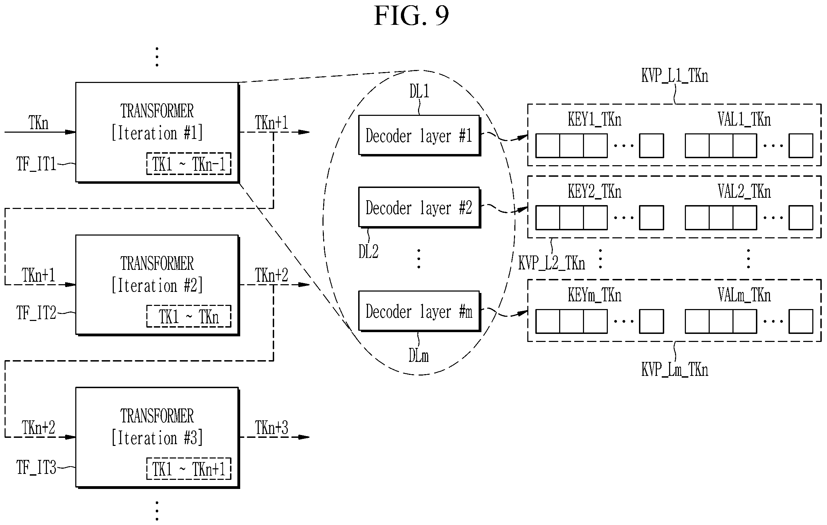

FIG. 9 is a drawing illustrating the operation of the transformer of FIG. 3 in more detail. Hereinafter, for a more brief explanation, a key-value vector pair in the memory device 160 which the transformer TF stores while the first iteration is being performed will be described with reference to FIGS. 1 to 9.

While the transformer TF performs the first iteration, the first to m-th decoder layers DL1 to DLm may store different key vectors in the memory device 160, respectively. For example, the first to m-th decoder layers DL1 to DLm may store the key vectors KEY1_TKn to KEYm_TKn in the memory device 160, respectively.

Similarly, while the transformer TF performs the first iteration, the first to m-th decoder layers DL1 to DLm may store different value vectors in the memory device 160, respectively. For example, the first to m-th decoder layers DL1 to DLm may store the value vectors VAL1_TK1 to VALm_TKn in the memory device 160, respectively.

In other words, when one decoder layer DL is executed, the first processing circuit 110 may store a key vector KEY and a value vector VAL corresponding to the input token TKin. Hereinafter, for a more brief explanation, a key vector KEY and a value vector VAL which the first processing circuit 110 stores in the memory device 160 while one decoder layer DL being executed will be referred to as a key-value vector pair KVP. For example, the key vector KEY1_TKn and the value vector VAL1_TKn may be referred to as a key-value vector pair KVP_L1_TKn; and a key vector KEY2_TKn and a value vector VAL2_TKn may be referred to as a key-value vector pair KVP_L2_TKn.

In some example embodiments, a key-value vector pair KVP_Li_TKj may refer to a key vector KEY and a value vector VAL which are related to the j-th token TKj and generated by the i-th decoder layer DLi. In other words, the key-value vector pair KVP_Li_TKj may refer to the key vector KEYi_TKj and the value vector VALi_TKj.

In this manner, whenever the transformer TF executes one decoder layer DL, one key-value vector pair KVP may be further stored in the memory device 160. Accordingly, whenever the transformer TF performs one iteration, 'm' of key-value vector pairs KVP may be further stored in the memory device 160.

In some example embodiments, the key-value vector pairs corresponding to preceding tokens for the input token TKin may be referred to as the "preceding key-value vector pairs". For example, the preceding key-value vector pairs may include preceding key vectors and preceding value vectors.

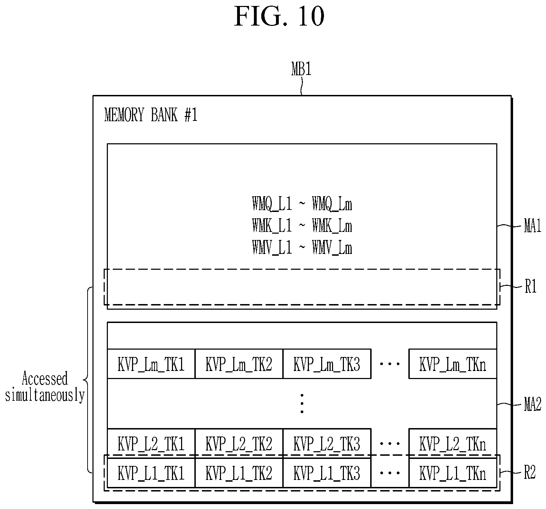

FIG. 10 is a drawing illustrating a memory bank which stores weight matrices and key-value vector pairs according to some example embodiments. Hereinafter, some example embodiments in which a plurality of weight matrices and a plurality of key-value vector pairs KVP required, or sufficient, for the operation of the transformer TF are stored in single memory bank (e.g., the first memory bank MB1) will be described as a representative example with reference to FIGS. 1 to 10.

The first memory bank MB1 may include a first memory area MA1 and/or a second memory area MA2.

The first memory area MA1 may store a plurality of weight matrices for operation of the transformer TF. For example, the first memory area MA1 may store at least some of the first to m-th query weight matrices WMQ_L1 to WMQ_Lm, first to m-th key weight matrices WMK_L1 to WMK_Lm, and/or first to m-th value weight matrices WMV_L1 to WMV_Lm which are used in linear calculation LNC of the first to m-th decoder layers DL1 to DLm, respectively. In this case, the first memory area MA1 may be accessed by the first processing circuit 110 which performs linear calculation LNC.

The second memory area MA2 may store a plurality of key-value vector pairs KVP necessary, or sufficient, for the operation of the transformer TF. For example, the second memory area MA2 may store at least some of a plurality of key-value vector pairs KVP_L1_TK1 to KVP_L1_TKn related to the first decoder layer DL1. Similarly, the second memory area MA2 may store at least some of a plurality of key-value vector pairs KVP_L2_TK1 to KVP_L2_TKn related to the second decoder layer DL2; and may store at least some of a plurality of key-value vector pairs KVP_Lm_TK1 to KVP_Lm_TKn related to the m-th decoder layer DLm. In this case, the second memory area MA2 may be accessed by the second processing circuit 120 which performs attention calculation ATC.

In other words, the first memory area MA1 and the second memory area MA2 may be accessed by different processing circuits. Accordingly, requests for access to the first memory area MA1 and the second memory area MA2 may occur simultaneously. In other words, a bank collision may occur in the first memory bank MB1. For example, while the first processing circuit 110 is performing a read operation on a first memory cell row R1 of the first memory area MA1, the second processing circuit 120 may make a request for a read operation on a second memory cell row R2 of the second memory area MA2. In this case, the read operation on the first memory cell row R1 may be delayed. A manner in which a read operation on the first memory bank MB1 is delayed when a bank collision occurs will be described in more detail with reference to the following FIG. 11.

FIG. 11 is a drawing illustrating a bank collision with the first memory bank of FIG. 10. Referring to FIGS. 1 to 11, the first memory bank MB1 may include a memory cell array MCA and/or a sense amplifier circuit SA. The memory cell array MCA may include the first and/or second memory cell rows R1 and/or R2.

The first processing circuit 110 may activate the first memory cell row R1. In other words, the first processing circuit 110 may issue an active command for the first memory cell row R1. In response to the active command for the first memory cell row R1, the first memory bank MB1 may provide the data stored in the first memory cell row R1 to the sense amplifier circuit SA. For example, data DTa_R1 to DTd_R1 of the first memory cell row may be stored in the sense amplifier circuit SA.

Thereafter, the first processing circuit 110 may access the data of the first memory cell row R1. In other words, the first processing circuit 110 may issue a plurality of read commands and sequentially read the data DTa_R1 to DTd_R1 stored in the sense amplifier circuit SA.

However, while the first processing circuit 110 is accessing the data stored in the sense amplifier circuit SA, an active command for the second memory cell row R2 may be issued from the second processing circuit 120. In other words, when the first processing circuit 110 has not yet read some data stored in the sense amplifier circuit SA, the second processing circuit 120 may issue an active command for the second memory cell row R2. For example, when the data DTc_R1 and DTd_R1 have not yet been read, an active command for the second memory cell row R2 for the first memory bank MB 1 may be provided to the memory device 160.

In response to the active command for the second memory cell row R2, the first memory bank MB 1 may provide the data stored in the second memory cell row R2 to the sense amplifier circuit SA. In this case, the data DTa_R1 to DTd_R4 of the first memory cell row stored in the sense amplifier circuit SA may be lost, and data DTa_R2 to DTd_R2 of the second memory cell row R2 may be newly stored in the sense amplifier circuit SA. Therefore, when an active command for the second memory cell row R2 is issued from the second processing circuit 120, the first processing circuit 110 may need to reissue an active command for the first memory cell row R1 to read the data DTc_R1 and DTd_R1.

In other words, when a bank collision occurs, the throughput of the first memory bank MB1 may decrease. In this case, the time required, or sufficient, to read data from the first memory bank MB1 may become greater, and therefore the operation performance of the transformer acceleration device 100 may be degraded.

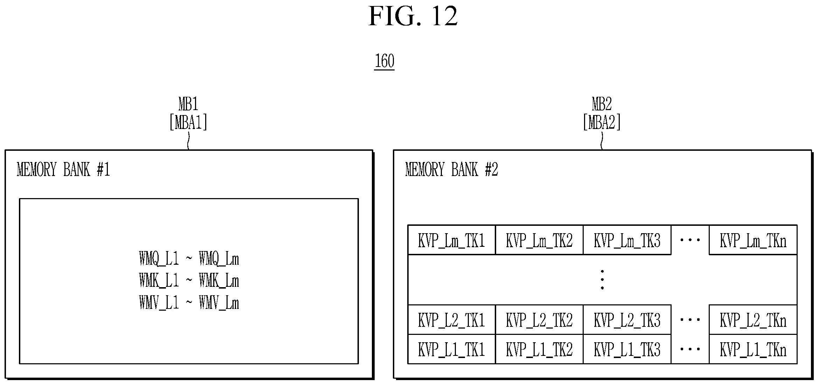

FIG. 12 is a drawing illustrating the memory device of FIG. 2 according to some example embodiments. Referring to FIGS. 1 to 9 and FIG. 12, the memory device 160 may include the first memory bank array MBA1 and/or the second memory bank array MBA2. The first memory bank array MBA1 may include the first memory bank MB1, and the second memory bank array MBA2 may include the second memory bank MB2.

The memory device 160 may store a plurality of weight matrices and/or a plurality of key-value vector pairs KVP in different memory bank arrays. For example, the memory device 160 may store the first to m-th query weight matrices WMQ_L1 to WMQ_Lm, the first to m-th key weight matrices WMK_L1 to WMK_Lm, and the first to m-th value weight matrices WMV_L1 to WMV_Lm in the first memory bank array MBA1. The memory device 160 may store a plurality of preceding key-value vector pairs in the second memory bank array MBA2.

Accordingly, a plurality of weight matrices and a plurality of key-value vector pairs KVP may be stored in different memory banks. For example, the first to m-th query weight matrices WMQ_L1 to WMQ_Lm, the first to m-th key weight matrices WMK_L1 to WMK_Lm, and the first to m-th value weight matrices WMV_L1 to WMV_Lm may be stored in the first memory bank MB1. The input token TKin and the key-value vector pairs KVP_L1_TK1 to KVP_Lm_TKn related to the preceding tokens for the input token may be stored in the second memory bank MB2.

In this case, simultaneous access to single memory bank from the first processing circuit 110 and the second processing circuit 120 may be reduced, or prevented. For example, since the first processing circuit 110 reads the plurality of weight matrices stored in the first memory bank MB 1 and the second processing circuit 120 reads the key-value vector pairs KVP stored in the second memory bank MB2, bank collision may be reduced, or prevented.

In some example embodiments, the total capacity of the plurality of weight matrices and the total capacity of the plurality of key-value vector pairs KVP may be different from each other. In this case, an imbalance in the capacity of data stored in the first memory bank MB 1 and the second memory bank MB2 may occur.

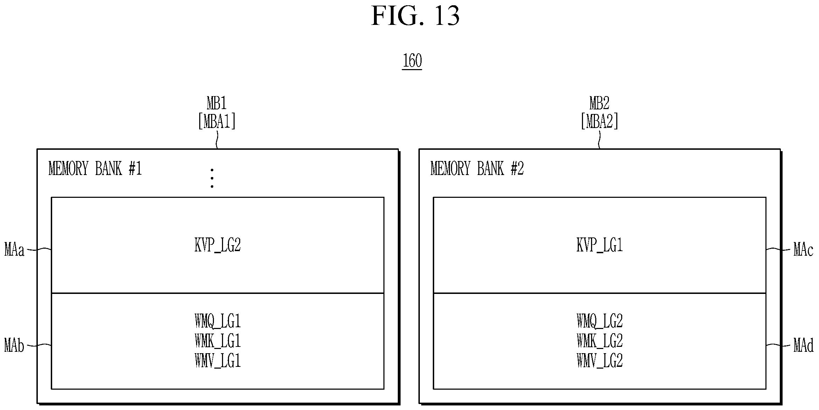

FIG. 13 is a drawing illustrating the memory device of FIG. 2 according to some example embodiments. Referring to FIGS. 1 to 9 and FIG. 13, the memory device 160 may include the first memory bank array MBA1 and/or the second memory bank array MBA2. The first memory bank array MBA1 may include a first memory bank MB1, and the second memory bank array MBA2 may include a second memory bank MB2. The first memory bank MB1 may include first and/or second memory areas MAa and/or MAb, and the second memory bank MB2 may include third and/or fourth memory areas MAc and/or MAd.

The memory device 160 may store a plurality of weight matrices and a plurality of key-value vector pairs KVP related to the each single decoder layer DL in different memory bank array. For example, the task scheduler 130 may classify the first to m-th decoder layers DL1 to DLm into first and second layer groups LG1 and LG2. In this case, the memory device 160 may store the plurality of weight matrices and the plurality of key-value vector pairs KVP related to the each layer group, in different memory bank array.

In some example embodiments, the numbers of decoder layers included in the first and second layer groups LG1 and LG2 may correspond to each other. For example, the numbers of decoder layers included in the first and second layer groups LG1 and LG2 may be the same as each other.

The memory device 160 may store the plurality of weight matrices related to the first layer group LG1 in the first memory bank array MBA1, and may store the plurality of key-value vector pairs KVP related to the first layer group LG1 in the second memory bank array MBA2. For example, the memory device 160 may store the plurality of weight matrices related to the first layer group LG1 in the first memory bank MB1, and may store the plurality of key-value vector pairs KVP related to the first layer group LG1 in the second memory bank MB2.

For a more detailed example, the memory device 160 may store a plurality of query weight matrices WMQ_LG1, a plurality of key weight matrices WMK_LG1, and/or a plurality of value weight matrices WMV_LG1 related to the first layer group LG1 in the second memory area MAb. The memory device 160 may store the plurality of key-value vector pairs KVP_LG1 related to the first layer group LG1 in the third memory area MAc.

In contrast, the memory device 160 may store a plurality of weight matrices related to the second layer group LG2 in the second memory bank array MBA2, and may store a plurality of key-value vector pairs KVP related to the second layer group LG2 in the first memory bank array MBA1. For example, the memory device 160 may store the plurality of weight matrices related to the second layer group LG2 in the second memory bank MB2, and may store the plurality of key-value vector pairs KVP related to the second layer group LG2 in the first memory bank MB 1.

For a more detailed example, the memory device 160 may store a plurality of query weight matrices WMQ_LG2, a plurality of key weight matrices WMK_LG2, and/or a plurality of value weight matrices WMV_LG2 related to the second layer group LG2, in the fourth memory area MAd. The memory device 160 may store a plurality of key-value vector pairs KVP_LG2 related to the second layer group LG2 in the first memory area MAa.

In some example embodiments, the plurality of query weight matrices WMQ_LG1 may include query weight matrices which are used in linear calculation LNC of each, or one or more, of the plurality of decoder layers DL included in the first layer group LG1. The plurality of query weight matrices WMQ_LG2 may include query weight matrices which are used in linear calculation LNC of each, or one or more, of the plurality of decoder layers DL included in the second layer group LG2. For a more brief explanation, a description of the plurality of key weight matrices WMK_LG1, the plurality of key weight matrices WMK_LG2, the plurality of value weight matrices WMV_LG1, and the plurality of value weight matrices WMV_LG2 which are defined similarly to the plurality of query weight matrices WMQ_LG1 and the plurality of query weight matrices WMQ_LG2 will not be made.

Therefore, a plurality of weight matrices and a plurality of key-value vector pairs KVP related to the each single decoder layer may be stored in different memory bank. In this case, simultaneous access of the first processing circuit 110 and the second processing circuit 120 to single memory bank can be reduced, or prevented. For example, when the transformer TF executes the decoder layers included in the first layer group LG1, the first processing circuit 110 may access the second memory area MAb and the second processing circuit 120 may access the third memory area MAc. In contrast, when the transformer TF executes the decoder layers included in the second layer group LG2, the first processing circuit 110 may access the fourth memory area MAd and the second processing circuit 120 may access the first memory area MAa. Therefore, according to the example embodiments, bank collisions may be reduced, or prevented. Accordingly, the transformer acceleration device 100 according to example embodiments may improve a speed and/or an efficiency of operation for generating a plurality of output tokens based on a plurality of input tokens.

Meanwhile, each of the decoder layers may have the same configuration. In this case, the total capacity (e.g. size) of data of weight matrices which are used in each decoder layers may be same each other, and the total capacity (e.g. size) of data of key-value vector pairs KVP which are used in the each decoder layers may be the same each other. Accordingly, when the numbers of decoder layers included in the first and second layer groups LG1 and LG2 are the same, the capacity (e.g. size) of the first memory area Maa and the third memory area Mac may be the same, and the capacity (e.g. size) of the second memory area Mab and the fourth memory area Mad may be the same. In this case, the sum of capacities of the first memory area Maa and the second memory area Mab and the sum of capacities of the third memory area Mac and the fourth memory area Mad may be the same. As a result, according to the some example embodiments, data may be stored in a more balanced manner in the first memory bank MB1 and the second memory bank MB2. Accordingly, transformer acceleration device 100 according to example embodiments may decrease a wear and/or increase a life span of the first memory bank MB 1 and/or the second memory bank MB2.

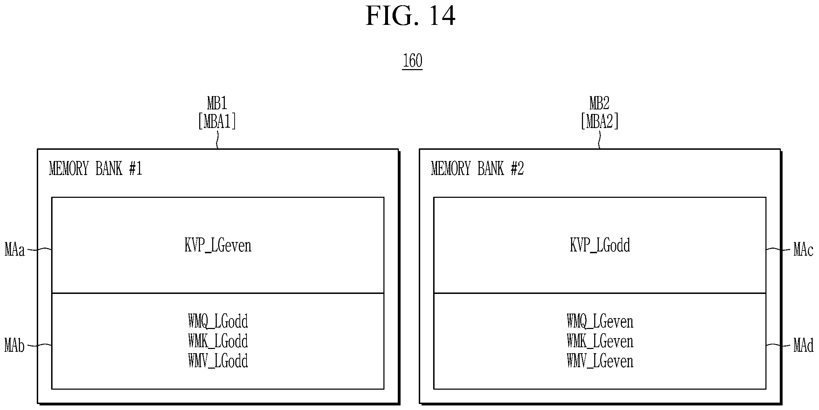

FIG. 14 is a block diagram illustrating the memory device of FIG. 13 implemented according to some example embodiments. Referring to FIGS. 1 to 9 and FIGS. 13 and 14, the task scheduler 130 may classify the first to m-th decoder layers DL1 to DLm into an odd-numbered layer group LGodd and an even-numbered layer group LGeven, according to the order of the first to m-th decoder layers DL1 to DLm. For example, the task scheduler 130 may classify the odd-numbered decoder layers (e.g., the first decoder layer DL1, the third decoder layer DL3, and the like) of the first to m-th decoder layers DL1 to DLm into the odd-numbered layer group LGodd. In contrast, the task scheduler 130 may classify the even-numbered decoder layers (e.g., the second decoder layer DL2, the fourth decoder layer D4, and the like) of the first to m-th decoder layers DL1 to DLm into the even-numbered layer group LGeven.

In this case, the memory device 160 may store a plurality of weight matrices related to the odd-numbered layer group LGodd in the first memory bank array MBA1, and may store a plurality of key-value vector pairs KVP related to the odd-numbered layer group LGodd in the second memory bank array MBA2.

For a more detailed example, the memory device 160 may store a plurality of query weight matrices WMQ LGodd, a plurality of key weight matrices WMK LGodd, and/or a plurality of value weight matrices WMV_LGodd related to the odd-numbered layer group LGodd in the second memory area MAb. The memory device 160 may store a plurality of key-value vector pairs KVP_LGodd related to the odd-numbered layer group LGodd in the third memory area MAc.

In contrast, the memory device 160 may store a plurality of weight matrices related to the even-numbered layer group LGeven in the second memory bank array MBA2, and may store a plurality of key-value vector pairs KVP related to the even-numbered layer group LGeven in the first memory bank array MBA1.

For a more detailed example, the memory device 160 may store a plurality of query weight matrices WMQ_LGeven, a plurality of key weight matrices WMK_LGeven, and/or a plurality of value weight matrices WMV_LGeven related to the even-numbered layer group LGeven in the fourth memory area MAd. The memory device 160 may store a plurality of key-value vector pairs KVP_LGeven related to the even-numbered layer group LGeven in the first memory area MAa.

In some example embodiments, 'm' may be an even number. In this case, the number of decoder layers included in the odd-numbered layer group LGodd may be the same as the number of decoder layers DL included in the even-numbered layer group LGeven. In this case, the capacity of data which is stored in the first memory bank array MBA1 may be the same as the capacity of data which is stored in the second memory bank array MBA2. However, example embodiments are not limited thereto. For example, according to some example embodiments, even when 'm' is an odd number, almost same capacity of data may be stored in the first memory bank array MBA1 and the second memory bank array MBA2.

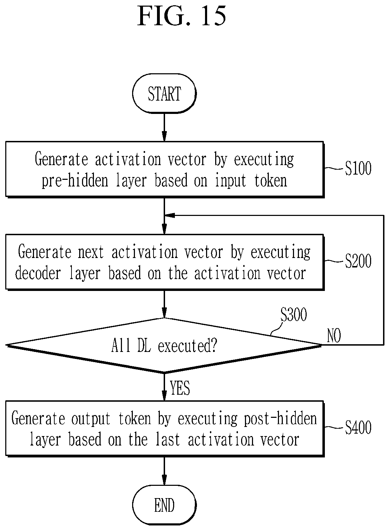

FIG. 15 is a flow chart illustrating an operation method of the transformer acceleration device of FIG. 1 according to some example embodiments. Hereinafter, how the transformer acceleration device 100 accelerates one iteration of the transformer TF will be described with reference to FIGS. 1 to 9 and FIGS. 13 to 15.

First, in operation S100, the transformer acceleration device 100 may generate an activation vector by executing a pre-hidden layer HL_pre based on an input token TKin. For example, when the transformer acceleration device 100 executes the transformer TF performing the first iteration, the transformer acceleration device 100 may generate the activation vector ACT1_TKn.

In operation S200, the transformer acceleration device 100 may generate a next activation vector by executing a decoder layer DL based on an activation vector ACT. For example, when the transformer acceleration device 100 executes the first decoder layer DL1, the transformer acceleration device 100 may generate the activation vector ACT2_TKn based on the activation vector ACT1_TKn.

In operation S300, whether all decoder layers DL have been executed may be determined. For example, the transformer acceleration device 100 may determine whether the activation vector ACTm+1_TKn has been generated through all decoder layers DL included in the transformer TF.

When it is determined in operation S300 that there is any decoder layer DL that has not yet been executed, operation S200 described above may be repeatedly performed. When it is determined that all decoder layers DL have been executed, the following operation S400 may be performed. In this manner, the transformer acceleration device 100 may generate the activation vector ACTm+1_TKn by sequentially converting the activation vector ACT1_TKn based on the first to m-th decoder layers DL1 to DLm. In some example embodiments, the activation vector ACTm+1_TKn may be referred to as the last activation vector.

In operation S400, the transformer acceleration device 100 may generate an output token TKout by executing the post-hidden layer HL_post based on the last activation vector.

In some example embodiments, the transformer acceleration device 100 may use the output token TKout generated by operation S400 as an input token TKin for the subsequent iteration of the transformer TF. In this case, the input token TKin used in operation S 100 may become a preceding token for the input token TKin for the subsequent iteration.

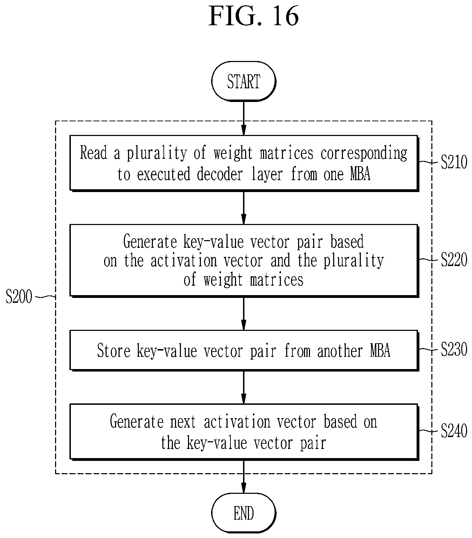

FIG. 16 is a flow chart illustrating operation S200 of FIG. 15 in more detail. Hereinafter, for a more brief explanation, a manner in which the transformer acceleration device 100 accelerates the first decoder layer DL1 included in the transformer TF will be described as a representative example with reference to FIGS. 1 to 9 and FIGS. 13 to 16. However, example embodiments are not limited thereto, and the transformer acceleration device 100 may accelerate the second to m-th decoder layers DL2 to DLm included in the transformer TF in a similar manner.

An operation S200 may include the following operation S210 to operation S240.

In operation S210, the transformer acceleration device 100 may read a plurality of weight matrices corresponding to the executed decoder layer DL from single memory bank array MBA. For example, the transformer acceleration device 100 may read a plurality of weight matrices related to the first decoder layer DL1 (e.g., the first query weight matrix WMQ_L1, the first key weight matrix WMK_L1, and/or the first value weight matrix WMV_L1) from the first memory bank array MBA1.

In operation S220, the transformer acceleration device 100 may generate a key-value vector pair KVP based on the activation vector and the plurality of weight matrices. For example, the first processing circuit 110 may generate the key-value vector pair KVP_L1_TKn based on results obtained by multiplying the first key weight matrix WMK_L1 and the first value weight matrix WMV_L1 to the activation vector ACT1_TKn.

In operation S230, the transformer acceleration device 100 may store the key-value vector pair KVP in another memory bank array MBA. In other words, the transformer acceleration device 100 may store the generated key-value vector pair KVP in a memory bank array different from the memory bank array storing the weight matrices related to the executed decoder layer DL. For example, the first processing circuit 110 may store the key-value vector pair KVP_L1_TKn in the second memory bank array MBA2. In this case, the plurality of weight matrices and the key-value vector pair KVP which are accessed during the execution of the first decoder layer DL1 may be stored in different memory bank.

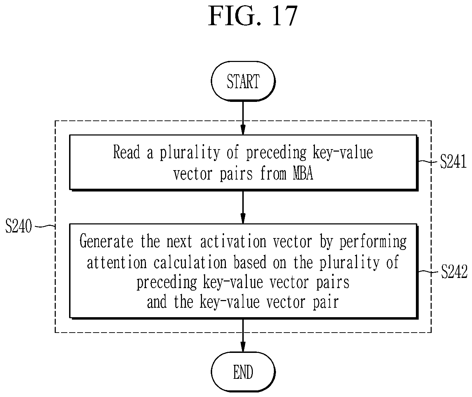

In operation S240, the transformer acceleration device 100 may generate the next activation vector based on the key-value vector pair KVP. For example, the second processing circuit 120 may perform an attention calculation ATC based on the generated key-value vector pair KVP; and the transformer acceleration device 100 may generate the next activation vector based on the result of the attention calculation ATC. For a more detailed example, the second processing circuit 120 may generate the attention vector AV1_TKn by performing an attention calculation ATC based on the key-value vector pair KVP_L1_TKn. In this case, the transformer acceleration device 100 may generate the activation vector ACT2_TKn based on the attention vector AV1_TKn. Operation S240 will be described in more detail with reference to the following FIG. 17.

FIG. 17 is a flow chart illustrating operation S240 of FIG. 16 in more detail. Referring to FIGS. 1 to 9 and FIGS. 13 to 17, operation S240 may include the following operation S241 and operation S242.

In operation S241, the transformer acceleration device 100 may read a plurality of preceding key-value vector pairs from another memory bank array MBA. For example, the second processing circuit 120 may read a plurality of preceding key-value vector pairs stored by the preceding iterations, from the second memory bank array MBA2. In this case, each of the preceding key-value vector pairs which the second processing circuit 120 read from the second memory bank array MBA2 may correspond to the same decoder layer, and may correspond to different (e.g. different preceding) tokens, respectively. For a more detailed example, the second processing circuit 120 may read the key-value vector pairs KVP_L1_TK1 to KVP_L1_TKn-1 from the second memory bank array MBA2.

In operation S242, the transformer acceleration device 100 may generate the next activation vector by performing an attention calculation ATC based on the key-value vector pair KVP and the plurality of preceding key-value vector pairs. For example, the second processing circuit 120 may perform an attention calculation ATC based on the plurality of preceding key-value vector pairs (e.g., the key-value vector pairs KVP_L1_TK1 to KVP_L1_TKn-1) and the key-value vector pair KVP_L1_TKn. The specific manner in which the second processing circuit 120 performs an attention calculation have been described above with reference to FIGS. 7 and 8, and thus a detailed description thereof will not be made.

FIG. 18 is a block diagram illustrating a transformer acceleration device according to some example embodiments. Referring to FIG. 18, a transformer acceleration device 200 may collectively receive input tokens TKin related to each of the token streams and collectively output output tokens TKout related to each of the token streams.

Hereinafter, for a more brief explanation, some example embodiments in which the transformer acceleration device 200 collectively generates output tokens TKout corresponding to a first token stream and a second token stream. However, example embodiments are not limited to the number of token streams which the transformer acceleration device 200 processes simultaneously.

Also, for a more brief explanation, hereinafter, some example embodiments in which the transformer acceleration device 200 collectively generates output tokens TKout related to the first token stream and the second token stream based on a batch scheme will be described as a representative example. Accordingly, hereinafter, the first token stream will be referred to as a first batch B 1, and the second token stream will be referred to as a second batch B2.

The transformer acceleration device 200 may execute transformer TF. With respect to each batch, based on one or more input tokens TKin, the transformer TF may generate an output token TKout proper (e.g. predicted) to follow the one or more input tokens TKin. For example, the transformer acceleration device 200 may receive one or more input tokens TKin_B1 related to the first batch, and may output an output token TKout_B1 related to the first batch. The transformer acceleration device 200 may receive one or more input tokens TKin_B2 related to the second batch, and may output an output token TKout_B2 related to the second batch.

In other words, unlike the transformer acceleration device 100 described with reference to FIGS. 1 to 17, the transformer acceleration device 200 may collectively perform calculations for a plurality of token streams. Hereinafter, for a more brief explanation, the differences between the transformer acceleration device 100 and the transformer acceleration device 200 will be mainly described.

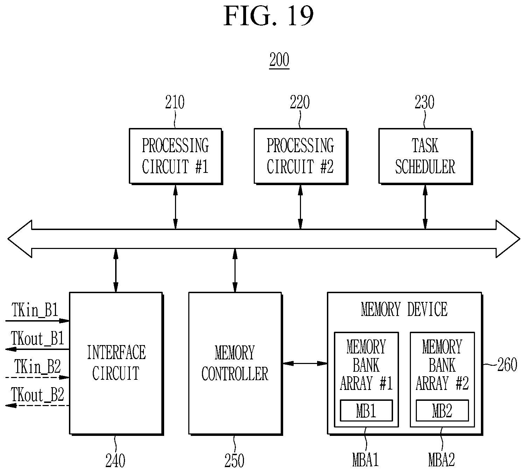

FIG. 19 is a block diagram illustrating the transformer acceleration device of FIG. 18 in more detail. Referring to FIGS. 18 and 19, the transformer acceleration device 200 may include a first processing circuit 210, a second processing circuit 220, a task scheduler 230, an interface circuit 240, a memory controller 250, and/or a memory device 260. For a more brief explanation, a detailed description of the first processing circuit 210, the second processing circuit 220, the task scheduler 230, the interface circuit 240, the memory controller 250, and the memory device 260 described above will not be made.

The memory device 260 may include a first memory bank array MBA1 and/or a second memory bank array MBA2. The first memory bank array MBA1 may include a first memory bank MB 1, and the second memory bank array MBA2 may include a second memory bank MB2.

The interface circuit 240 may receive input tokens TKin related to each batch from an external device, and may output an output token TKout related to each batch to the external device. For example, the interface circuit 240 may receive one or more input tokens TKin_B1 related to the first batch and one or more input tokens TKin_B2 related to the second batch from an external device, and may output one or more output tokens TKout_B1 related to the first batch and one or more output tokens TKout_B2 related to the second batch to the external device.

The memory device 260 may store data that will be used repeatedly in calculations to be performed by the first processing circuit 210 and the second processing circuit 220. For example, the memory device 260 may store weight matrices and key-value vector pairs.

The task scheduler 230 may dispersedly allocate data likely to be accessed simultaneously by the first processing circuit 210 and the second processing circuit 220, to different memory bank array. The memory device 260 may dispersedly store data likely to be accessed simultaneously by the first processing circuit 210 and the second processing circuit 220, in different memory bank arrays, under the control of the task scheduler 230.

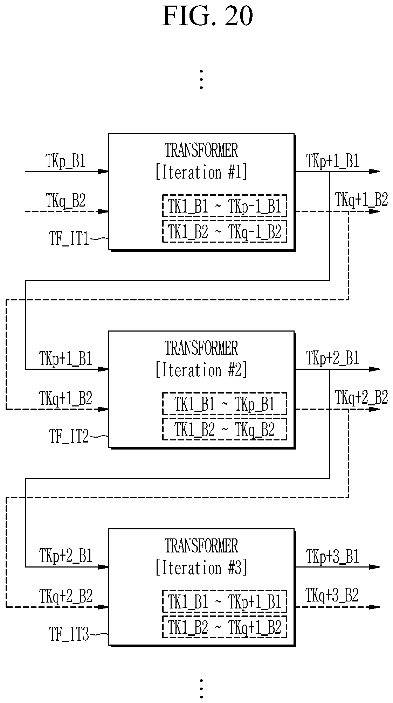

FIG. 20 is a block diagram illustrating an operation of the transformer of FIG. 18 according to some example embodiments. Referring to FIGS. 18 to 20, the transformer TF may sequentially operate over a plurality of iterations. Whenever performing each iteration, the transformer TF may generate a plurality of output tokens TKout corresponding to a plurality of token streams, respectively.

The transformer TF may perform a plurality of iterations in an auto-regressive manner, with respect to each batch. Whenever performing each of a plurality of iterations, the transformer TF may generate one output token TKout with respect to each batch. For example, the transformer performing a first iteration TF_IT1 may generate a (p+1)-th token TKp+1_B1 related to the first batch based on a p-th token TKp_B1 related to the first batch; and may generate a (q+1)-th token TKq+1_B2 related to the second batch based on a q-th token TKq_B2 related to the second batch.

Thereafter, the transformer performing a second iteration TF_IT2 may generate a (p+2)-th token TKp+2_B1 related to the first batch based on the (p+1)-th token TKp+1_B1 related to the first batch; and may generate a (q+2)-th token TKq+2_B2 related to the second batch based on the (q+1)-th token TKq+1_B2 related to the second batch.

In this manner, the transformer acceleration device 200 may sequentially generate a plurality of tokens with respect to each batch by executing the transformer TF over a plurality of iterations. In this case, the plurality of tokens corresponding to the first batch may form a first token sequence; and the plurality of tokens corresponding to the second batch may form a second token sequence. For example, first to (p+3)-th tokens TK1_B1 to TKp+3_B1 related to the first batch may form a first token sequence, and first to (q+3)-th tokens TK1_B2 to TKq+3_B2 related to the second batch may form a second token sequence. Each iteration may generate a token corresponding to each batch.

In some example embodiments, when the transformer acceleration device 200 is used to implement an LLM, different token sequences may correspond to sentences to be output to different users, respectively. For instance, the different token sequences may be independent of each other. However, example embodiments are not limited thereto.

In some example embodiments, 'p' and 'q' may be the same or different integers. In other words, the transformer acceleration device 200 may perform each iteration regardless of the relative lengths of the first token sequence and the second token sequence.

In some example embodiments, in one token sequence, tokens preceding a specific token may be referred to as "preceding tokens for the specific token". For example, the first to (p-1)-th tokens TK1_B1 to TKp-1_B1 related to the first batch may be referred to as preceding tokens for the p-th token TKp_B1 related to the first batch; and the first to p-th tokens TK1_B1 to TKp_B1 related to the first batch may be referred to as preceding tokens for the (p+1)-th token TKp+1_B1 related to the first batch. Similarly, the first to (q-1)-th tokens TK1_B2 to TKq-1_B2 related to the second batch may be referred to as preceding tokens for the q-th token TKq_B2 related to the second batch; and the first to q-th tokens TK1_B2 to TKq_B2 related to the second batch may be referred to as preceding tokens for the (q+1)-th token TKq+1_B2 related to the second batch.

When performing one iteration, the transformer TF may generate an output token TKout based on an input token TKin related to each batch and preceding tokens for the input token TKin. For example, the transformer performing the first iteration TF_IT1 may generate the (p+1)-th token TKp+1_B1 related to the first batch based on the p-th token TKp_B1 related to the first batch and the first to (p-1)-th tokens TK1_B1 to TKp-1_B1 related to the first batch; and may generate the (q+1)-th token TKq+1_B2 related to the second batch based on the q-th token TKq_B2 related to the second batch and the first to (q-1)-th tokens TK1_B2 to TKq-1_B2 related to the second batch.

In other words, while performing any iteration, the transformer TF may repeatedly request calculation results (e.g., key-value vector pairs KVP) corresponding to the preceding tokens related to the first batch and the preceding tokens related to the second batch, already used in performing the preceding iterations. Therefore, the transformer TF may be implemented to store the calculation results for the input token related to the first batch and the input token related to the second batch whenever each iteration being performed; and thereafter reuse them when performing the subsequent iterations. More generally, in each iteration, the transformer TF may access preceding calculation results (e.g. key-value pairs KVP) for each batch and may be configured to store new calculation results (e.g. newly generated key-value pairs) for each batch. A manner in which the transformer TF generates an output token with respect to one batch while performing one iteration is similar to that described above with reference to FIGS. 1 to 17, and thus a detailed description thereof will not be made.

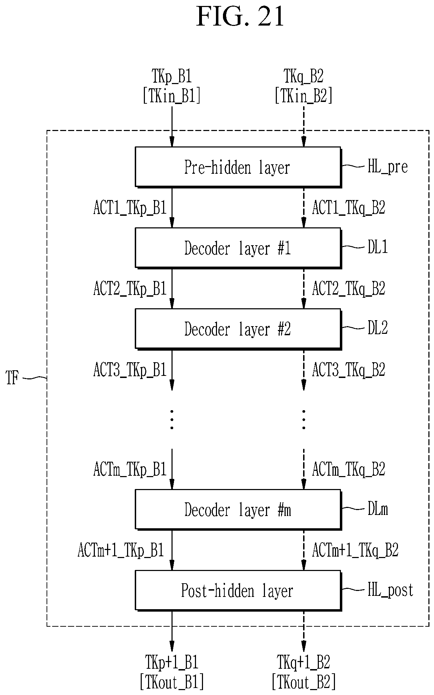

FIG. 21 is a drawing illustrating the configuration of the transformer of FIG. 20 in more detail. Hereinafter, the configuration and operation of the transformer TF which performs the first iteration will be described as a representative example with reference to FIGS. 18 to 21. However, example embodiments are not limited thereto, and the configuration and operation of the transformer TF may be implemented in a similar manner even when performing other iterations.

The transformer TF may include a pre-hidden layer HL_pre, first to m-th decoder layers DL1 to DLm, and/or a post-hidden layer HL_post.

The pre-hidden layer HL_pre may generate an activation vector ACT1_TKp_B1 corresponding to the input token TKin_B1 related to the first batch (e.g., the p-th token TKp_B1 related to the first batch), based on the input token; and may generate an activation vector ACT1_TKq_B2 corresponding to the input token TKin_B2 related to the second batch (e.g., the q-th token TKq_B2 related to the second batch), based on the input token. That is, the pre-hidden layer HL_pre may generate activation vectors for each batch.

The first to m-th decoder layers DL1 to DLm may generate an activation vector ACTm+1_TKp_B1 related to the first batch and may generate an activation vector ACTm+1_TKq_B2 related to the second batch, by sequentially converting activation vectors related to each batch. That is, the decoder layers may generate activation vectors for each batch. The operation of each of the first to m-th decoder layers DL1 to DLm related to one batch is similar to that described with reference to FIG. 4, and thus a detailed description thereof will not be made.

In some example embodiments, the dimensions of the activation vectors relative to different batches which are provided to single decoder layer DL may be the same. For example, the activation vector ACT1_TKp_B1 and the activation vector ACT1_TKq_B2 may include the same number of elements.

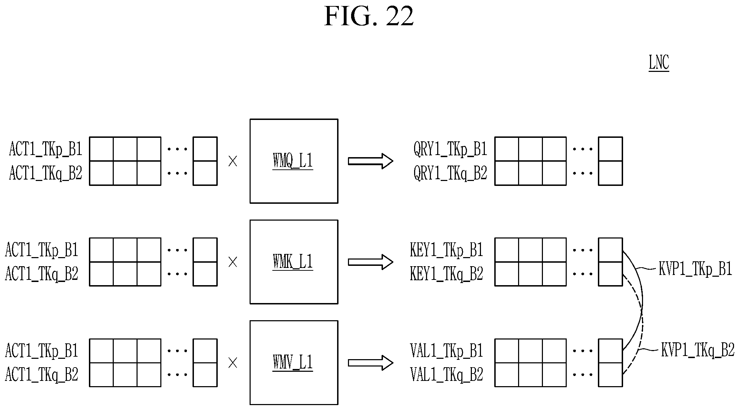

Each, or one or more, of the first to m-th decoder layers DL1 to DLm may collectively generate the results of calculations for the input tokens TKin related to each of the batches. For example, each, or one or more, of the first to m-th decoder layers DL1 to DLm may collectively calculate a key-value vector pair related to the first batch and a key-value vector pair related to the second batch. A manner in which each, or one or more, of the first to m-th decoder layers DL1 to DLm collectively calculates key-value vector pairs related to different batches will be described in more detail with reference to the following FIG. 22.

Each, or one or more, of the first to m-th decoder layers DL1 to DLm may store the generated key-value vector pairs in the memory device 260. Each, or one or more, of the first to m-th decoder layers DL1 to DLm may generate an activation vector related to each batch based on the generated key-value vector pair related to each batch.

The post-hidden layer HL_post may calculate the output token TKout_B1 related to the first batch (e.g., the (p+1)-th token TKp+1_B1 related to the first batch) based on the activation vector ACTm+1_TKp_B1 related to the first batch; and may calculate the output token TKout_B2 related to the second batch (e.g., the (q+1)-th token TKq+1_B2 related to the second batch) based on the activation vector ACTm+1_TKq_B2 related to the second batch. That is, the post-hidden layer HL_post may calculate an output token for each batch.

In some example embodiments, an activation vector ACTi_TKj_Bb may refer to an activation vector which corresponds to a j-th token TKj_Bb related to a b-th batch and is provided to the i-th decoder layer (wherein 'i' is an integer equal to or greater than 1, and equal to or smaller than m).

In some example embodiments, an activation vector ACTm+1_TKj_Bb may refer to an activation vector which corresponds to a j-th token TKj related to the b-th batch and is provided to the post-hidden layer HL_post.

FIG. 22 is a drawing illustrating a linear calculation, which is performed by one of the decoder layers of FIG. 21, in more detail. Hereinafter, some example embodiments in which the first decoder layer DL1 performs linear calculation LNC for the p-th token TKp_B1 related to the first batch and for the q-th token TKq_B2 related to the second batch will be described as a representative example with reference to FIGS. 18 to 22.

The first processing circuit 210 may read a first query weight matrix WMQ_L1, a first key weight matrix WMK_L1, and a first value weight matrix WMV_L1 stored in the memory device 260.

The first processing circuit 210 may perform linear calculation LNC based on results obtained by multiplying activation vectors related to different batches with the same weight matrix. In other words, the first decoder layer DL1 may calculate a query vector related to the first batch and a query vector related to the second batch based on one query weight matrix; and may calculate a key vector related to the first batch and a key vector related to the second batch based on one key weight matrix; and may calculate a value vector related to the first batch and a value vector related to the second batch based on one value weight matrix. That is, the first processing circuit 210 may calculate a key vector, a query vector and a value vector for each batch.

More specifically, the first processing circuit 210 may generate a query vector QRY1_TKp_B1 and a query vector QRY1_TKq_B2 based on results obtained by multiplying the first query weight matrix WMQ_L1 to each of an activation vector ACT1_TKp_B1 and an activation vector ACT1_TKq_B2.

For example, the first processing circuit 210 may generate a matrix including the query vector QRY1_TKp_B1 and the query vector QRY1_TKq_B2, by multiplying the first query weight matrix WMQ_L1 with a matrix generated by concatenating the activation vector ACT1_TKp_B1 and the activation vector ACT1_TKq_B2. That is, the first processing circuit 210 may generate a matrix including a query vector for each batch, by multiplying the query weight matrix WMQ_L1 with a matrix generated by concatenating the activation vectors for each batch. The concatenated matrix may include different activation vectors on different rows of the matrix. Since the first processing circuit 210 may read the first query weight matrix WMQ_L1 from the memory device 260 once and collectively calculate a plurality of query vectors related to different batches, the number of times of access of the first processing circuit 210 to the memory device 260 may be reduced, or minimized. Therefore, according to some example embodiments, the overall speed of operation of the transformer acceleration device 200 may be improved.

Similarly, the first processing circuit 210 may collectively calculate a key vector KEY1_TKp_B1 and a key vector KEY1_TKq_B2, and may collectively calculate a value vector VAL1_TKp_B1 and a value vector VAL1_TKq_B2. In this case, since the number of times the first processing circuit 210 accesses the memory device 260 to read the first key weight matrix WMK_L1 and the first value weight matrix WMV_L1 may be reduced, or minimized, the overall speed of operation of the transformer acceleration device 200 may be improved.

The key vector KEY1_TKp_B1 and the value vector VAL1_TKp_B1 may be referred to as a key-value vector pair KVP1_TKp_B1 related to the first batch. The key vector KEY1_TKq_B2 and the value vector VAL1_TKq_B2 may be referred to as a key-value vector pair KVP1_TKq_B2 related to the second batch. The first processing circuit 210 may store the key-value vector pair KVP1_TKp_B1 and the key-value vector pair KVP 1_TKq_B2 in the memory device 260.

In this case, similar to what has been described above with reference to FIGS. 7 and 8, the key-value vector pair KVP1_TKp_B1 may be reused when the attention calculation ATC of the transformer TF which performs the subsequent iteration is performed for the first batch; and the key-value vector pair KVP1_TKq_B2 may be reused when the attention calculation ATC of the transformer TF which performs the subsequent iteration is performed for the second batch.

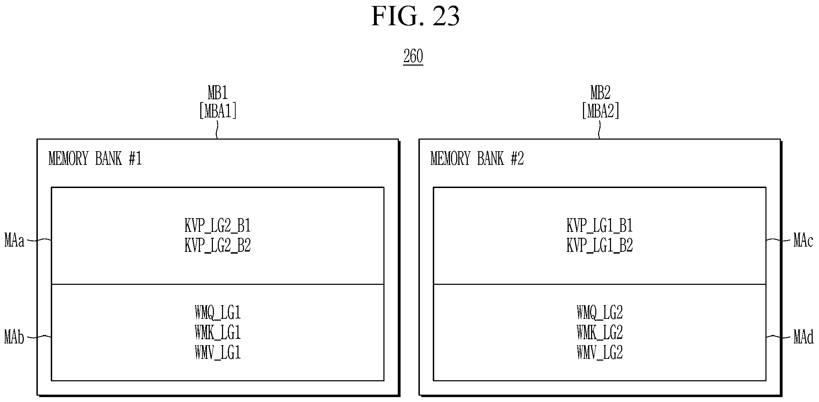

FIG. 23 is a drawing illustrating the memory device of FIG. 19 according to some example embodiments. Referring to FIGS. 18 to 23, the memory device 260 may include a first memory bank array MBA1 and/or a second memory bank array MBA2. The first memory bank array MBA1 may include a first memory bank MB 1, and the second memory bank array MBA2 may include a second memory bank MB2. The first memory bank MB 1 may include first and/or second memory areas MAa and/or MAb, and the second memory bank MB2 may include third fourth memory areas MAc and/or MAd.

The memory device 260 may store a plurality of weight matrices and a plurality of key-value vector pairs KVP related to the each single decoder layer DL, in different memory bank arrays. For example, the task scheduler 230 may classify the first to m-th decoder layers DL1 to DLm into first and second layer groups LG1 and LG2. In this case, the memory device 260 may store the plurality of weight matrices and the plurality of key-value vector pairs KVP related to the each layer group, in different memory bank array.

In other words, the memory device 260 may store the plurality of weight matrices related to the first layer group LG1 in the first memory bank array MBA1; and may store the plurality of key-value vector pairs KVP of the first layer group LG1 related to the first batch and the second batch in the second memory bank array MBA2. For example, the memory device 260 may store the plurality of weight matrices related to the first layer group LG1 in the first memory bank MB1; and may store the plurality of key-value vector pairs KVP of the first layer group LG1 related to the first batch and the second batch in the second memory bank MB2.

For a more detailed example, the memory device 260 may store a plurality of query weight matrices WMQ_LG1, a plurality of key weight matrices WMK_LG1, and/or a plurality of value weight matrices WMV_LG1 related to the first layer group LG1 in the second memory area MAb. The memory device 260 may store a plurality of key-value vector pairs KVP_LG1_B1 of the first layer group LG1 related to the first batch and a plurality of key-value vector pairs KVP_LG1_B2 of the first layer group related to the second batch in the third memory area MAc.

In contrast, the memory device 260 may store a plurality of weight matrices related to the second layer group LG2 in the second memory bank array MBA2; and may store a plurality of key-value vector pairs KVP of the second layer group LG2 related to the first batch and the second batch in the first memory bank array MBA1. For example, the memory device 160 may store the plurality of weight matrices related to the second layer group LG2 in the second memory bank MB2; and may store the plurality of key-value vector pairs KVP of the second layer group LG2 related to the first batch and the second batch in the first memory bank MB1.

For a more detailed example, the memory device 260 may store a plurality of query weight matrices WMQ_LG2, a plurality of key weight matrices WMK_LG2, and/or a plurality of value weight matrices WMV_LG2 related to the second layer group LG2, in the fourth memory area MAd. The memory device 260 may store a plurality of key-value vector pairs KVP_LG2_B1 of the second layer group LG2 related to the first batch and a plurality of key-value vector pairs KVP_LG2_B2 of the second layer group related to the second batch in the first memory area MAa.

In other words, the memory device 260 may store key-value vector pairs, which are included in the same layer group and are related to different batches, in the same memory bank array.

In other words, a plurality of weight matrices and a plurality of key-value vector pairs KVP related to the each of the decoder layers may be stored in different memory banks. In this case, simultaneous access of the first processing circuit 210 and the second processing circuit 220 to one memory bank can be reduced, or prevented. Therefore, according to some example embodiments, bank collisions can be reduced, or prevented. Accordingly, the transformer acceleration device 200 according to example embodiments may improve a speed and/or an efficiency of operation for generating a plurality of output tokens based on a plurality of input tokens.

In some example embodiments, the numbers of decoder layers DL which are included in the first layer group LG1 and the second layer group LG2 may be the same as each other. In this case, when one iteration is performed, the transformer TF may generate key-value vector pairs KVP_LG1_B1 of the first layer group LG1 related to the first batch same as the number of the plurality of key-value vector pairs KVP_LG2_B1 of the second layer group LG2 related to the first batch. Similarly, when one iteration is performed, the transformer TF may generate key-value vector pairs KVP_LG1_B2 of the first layer group LG1 related to the second batch same as the number of the plurality of key-value vector pairs KVP_LG2_B2 of the second layer group LG2 related to the second batch. Therefore, according to some example embodiments, the capacity of data which are stored in the first memory bank array MBA1 may be the same as the capacity of data which are stored in the second memory bank array MBA2. Accordingly, transformer acceleration device 200 according to example embodiments may decrease a wear and/or increase a life span of the first memory bank MBA1 and/or the second memory bank MBA2.

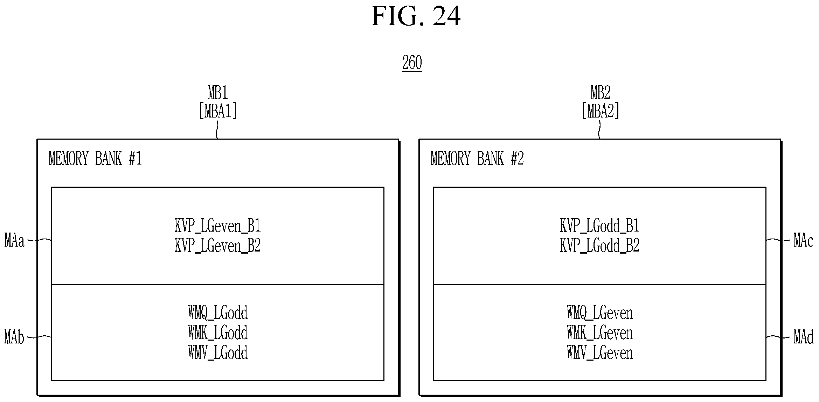

FIG. 24 is a block diagram illustrating the memory device of FIG. 23 implemented according to some example embodiments. Referring to FIGS. 18 to 24, the task scheduler 230 may classify the first to m-th decoder layers DL1 to DLm into an odd-numbered layer group LGodd and an even-numbered layer group LGeven, according to the order of the first to m-th decoder layers DL1 to DLm. In this case, the memory device 260 may store a plurality of weight matrices related to the odd-numbered layer group LGodd in the first memory bank array MBA1, and may store a plurality of key-value vector pairs KVP related to the odd-numbered layer group LGodd in the second memory bank array MBA2.

For a more detailed example, the memory device 260 may store a plurality of query weight matrices WMQ LGodd, a plurality of key weight matrices WMK LGodd, and/or a plurality of value weight matrices WMV_LGodd related to the odd-numbered layer group LGodd in the second memory area MAb. The memory device 260 may store a plurality of key-value vector pairs KVP_LGodd_B1 of the odd-numbered layer group LGodd related to the first batch and/or a plurality of key-value vector pairs KVP_LGodd_B2 of the odd-numbered layer group related to the second batch, in the third memory area MAc.

In contrast, the memory device 260 may store a plurality of weight matrices related to the even-numbered layer group LGeven in the second memory bank array MBA2, and may store a plurality of key-value vector pairs KVP related to the even-numbered layer group LGeven in the first memory bank array MBA1.

For a more detailed example, the memory device 260 may store a plurality of query weight matrices WMQ_LGeven, a plurality of key weight matrices WMK_LGeven, and/or a plurality of value weight matrices WMV_LGeven related to the even-numbered layer group LGeven in the fourth memory area MAd. The memory device 260 may store a plurality of key-value vector pairs KVP_LGeven_B1 of the even-numbered layer group LGeven related to the first batch and a plurality of key-value vector pairs KVP_LGeven_B1 of the even-numbered layer group related to the second batch, in the first memory area MAa.

In some example embodiments, 'm' may be an even number. In this case, the numbers of decoder layers DL included in the odd-numbered layer group LGodd and the even-numbered layer group LGeven may be the same. In this case, the capacity of data which are stored in the first memory bank array MBA1 may be the same as the capacity of data which are stored in the second memory bank array MBA2.

While the above embodiments discuss two batches, it will be appreciated that any number of batches may be implemented.

FIG. 25 is a block diagram illustrating the configuration of a transformer of FIG. 3 according to some example embodiments. Hereinafter, the configuration and operation of the transformer TF which operates in a multi-head scheme based on one token stream will be described with reference to FIGS. 1 to 17 and FIG. 25. However, example embodiments are not limited thereto, and the transformer TF may also operate with respect to a plurality of token streams in a similar manner.

The transformer TF may include a pre-hidden layer HL_pre, first to m-th decoder layers DL1 to DLm, and/or a post-hidden layer HL_post.

The pre-hidden layer HL_pre may generate a full-activation vector FACT corresponding to an input token TKin, based on the input token TKin. For example, the pre-hidden layer HL_pre may generate a full-activation vector FACT1_TKn based on the n-th token TKn.

The first to m-th decoder layers DL1 to DLm may generate a full-activation vector FACTm+1_TKn by sequentially converting the full-activation vector FACT1_TKn. For example, the first decoder layer DL1 may generate a full-activation vector FACT2_TKn based on the full-activation vector FACT1_TKn; and the second decoder layer DL2 may generate a full-activation vector FACT3_TKn based on the full-activation vector FACT2_TKn. In this manner, the m-th decoder layer DLm may generate the full-activation vector FACTm+1_TKn based on a full-activation vector FACTm_TKn.

In some example embodiments, the full-activation vectors FACT1_TKn to FACTm+1_TKn may have the dimensions of integer multiples of the dimensions of the activation vectors ACT1_TKn to ACTm+1_TKn described above with reference to FIGS. 1 to 17, respectively.

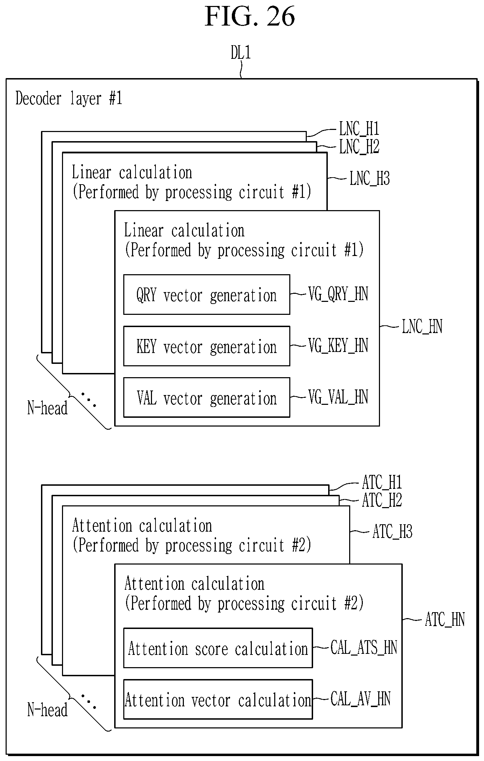

The specific configuration and operation of each of the first to m-th decoder layers DL1 to DLm will be described in more detail with reference to the following FIGS. 26 to 29.

The post-hidden layer HL_post may generate an output token TKout (e.g., the (n+1)-th token TKn+1) based on the full-activation vector FACTm+1_TKn.

In some example embodiments, a full-activation vector FACTi_TKj may refer to a full-activation vector which corresponds to a j-th token TKj and is provided to an i-th decoder layer DLi (wherein i is an integer equal to or greater than 1 and equal to or smaller than m).

In some example embodiments, a full-activation vector FACTm+1_TKj may refer to a full-activation vector which corresponds to the j-th token TKj and is provided to the post-hidden layer HL_post.

FIG. 26 is a drawing illustrating the configuration of a decoder layer of FIG. 25 in more detail. Hereinafter, the configuration and operation of the first decoder layer DL1 which operates in a multi-head scheme will be described as a representative example with reference to FIGS. 1 to 17 and FIGS. 25 and 26. However, example embodiments are not limited thereto, and the second to m-th decoder layers DL2 to DLm may be implemented in a similar manner.

The first decoder layer DL1 may include linear calculation LNC and attention calculation ATC.

The first decoder layer DL1 may dispersedly perform linear calculation LNC and attention calculation ATC based on a plurality of heads. Hereinafter, for a more brief explanation, it is assumed that the transformer TF performs a multi-head attention operation based on 'N' number of heads. In other words, hereinafter, it is assumed that the number of heads is 'N'.

The first decoder layer DL1 may include linear calculations LNC_H1 to LNC_HN respectively related to the first to N-th head. Each, or one or more, of the linear calculations LNC_H1 to LNC_HN may include the query vector generation VG_QRY, the key vector generation VG_KEY, and/or the value vector generation VG_VAL described above with reference to FIGS. 1 to 17. Hereinafter, for a more brief explanation, query vector generation VG_QRY, key vector generation VG_KEY, and value vector generation VG_VAL included in a linear calculation LNC_Hi related to the i-th head will be referred to as query vector generation VG_QRY_Hi related to the i-th head, key vector generation VG_KEY_Hi related to the i-th head, and value vector generation VG_VAL_Hi related to the i-th head, respectively.

In some example embodiments, the linear calculation LNC may be performed by the first processing circuit 110. For example, linear calculations LNC_H1 to LNC_HN may be performed based on different processing cores included in the first processing circuit 110, respectively. However, example embodiments are not limited thereto, and one or more processing cores included in the first processing circuit 110 may sequentially perform two or more of linear calculations LNC_H1 to LNC_HN.

The first decoder layer DL1 may include attention calculations ATC_H1 to ATC_HN respectively related to first to N-th head. Each, or one or more, of the attention calculations ATC_H1 to ATC_HN may include the attention score calculation CAL_ATS and the attention vector calculation CAL_AV described above with reference to FIGS. 1 to 17. Hereinafter, for a more brief explanation, the attention score calculation CAL_ATS and the attention vector calculation CAL_AV included in an attention calculation ATC_Hi related to the i-th head will be referred to as an attention score calculation CAL_ATS_Hi and an attention vector calculation CAL_AV_Hi related to the i-th head, respectively.

In some example embodiments, the attention calculation ATC may be performed by the second processing circuit 120. For example, the attention calculations ATC_H1 to ATC_HN may be performed based on different processing cores included in the second processing circuit 120, respectively. However, example embodiments are not limited thereto, and one or more processing cores included in the second processing circuit 120 may sequentially perform two or more of attention calculations ATC_H1 to ATC_HN.

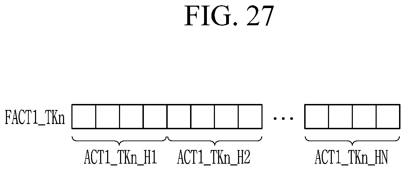

FIG. 27 is a drawing illustrating a full-activation vector of FIG. 25 in more detail. Referring to FIGS. 1 to 17 and FIGS. 25 to 27, the full-activation vector FACT1_TKn may be divided into a plurality of activation vectors respectively corresponding to the plurality of heads. Hereinafter, for a more brief explanation, it is assumed that the dimension of each head is '4'. In other words, hereinafter, it is assumed that each head has a dimension of '4'. However, example embodiments are not limited thereto.

The full-activation vector FACT1_TKn may include a plurality of elements. The full-activation vector FACT1_TKn may be divided into activation vectors each of which comprises the number of elements corresponding to the dimension of a head (e.g., 4). For example, the full-activation vector FACT1_TKn may be divided into activation vectors ACT1_TKn_H1 to ACT1_TKn_HN.

In some example embodiments, an activation vector ACTi_TKj_Hh may refer to an activation vector which corresponds to an h-th head and the j-th token TKj and is provided to the i-th decoder layer.

In some example embodiments, the activation vector ACT1_TKn described above with reference to FIGS. 1 to 17 may correspond to one of the activation vector ACT1_TKn_H1 to the activation vector ACT1_TKn_HN.

For a more brief explanation, in FIG. 27, the configuration of the full-activation vector FACT1_TKn is illustrated as a representative example; however, example embodiments are not limited thereto. For example, the full-activation vectors FACT2_TKn to FACTm+1_TKn may also be divided and be calculated with respect to the plurality of heads in a similar manner.

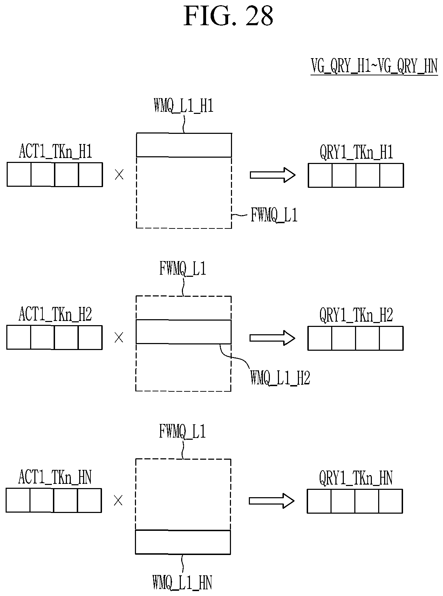

FIG. 28 is a drawing illustrating the linear calculation of FIG. 26. Referring to FIGS. 1 to 17 and FIGS. 25 to 28, the full-activation vector FACT1_TKn may be divided into the activation vectors ACT1_TKn_H1 to ACT1_TKn_HN.

When the first processing circuit 110 performs the query vector generation VG_QRY_H1 related to the first head, the first processing circuit 110 may read a first query weight matrix WMQ_L1_H1 stored in the memory device 160. In this case, the first query weight matrix WMQ_L1_H1 related to the first head may correspond to a first subset of rows (e.g. the first to fourth row) of a first full-query weight matrix FWMQ_L1.

The first processing circuit 110 may generate a query vector QRY1_TKn_H1 based on a result obtained by multiplying the first query weight matrix WMQ_L1_H1 to the activation vector ACT1_TKn_H1.

Similarly, when the first processing circuit 110 performs query vector generation VG_QRY_H2 related to the second head, the first processing circuit 110 may read a first query weight matrix WMQ_L1_H2 stored in the memory device 160. In this case, the first query weight matrix WMQ_L1_H2 may correspond to a second subset (e.g. the fifth to eight rows) of the first full-query weight matrix FWMQ_L1.

The first processing circuit 110 may generate a query vector QRY1_TKn_H2 based on a result obtained by multiplying the first query weight matrix WMQ_L1_H2 to the activation vector ACT1_TKn_H2.

In this manner, the first processing circuit 110 may independently perform the query vector generation VG_QRY_H1 to VG_QRY_HN respectively related to the first to N-th head. For example, the first processing circuit 110 may perform the query vector generation VG_QRY_H1 to VG_QRY_HN based on different processing cores from each other; or the first processing circuit 110 may perform the query vector generation VG_QRY_H1 to VG_QRY_HN at different times from each other.

In some example embodiments, the query vector QRY1_TKn described above with reference to FIGS. 1 to 17 may correspond to one of the query vectors QRY1_TKn_H1 to QRY1_TKn_HN.

In some example embodiments, the product of the full-activation vector FACT1_TKn and the first full-query weight matrix FWMQ_L1 may correspond to a first full-query vector (hereinafter, it may be referred to as "FQRY1_TKn"). In this case, the first full-query vector FQRY1_TKn may include the query vectors QRY1_TKn_H1 to QRY1_TKn_HN.

In some example embodiments, a query vector QRYi_TKj_Hh may refer to a query vector that corresponds to the j-th token TKj and is generated in the h-th head related to the i-th decoder layer DLi.

For a more brief explanation, in FIG. 28, the query vector generation VG_QRY related to a full-activation vector FACT1_TKn is illustrated as a representative example. However, example embodiments are not limited thereto, and the transformer TF may also perform the key vector generation VG_KEY and the value vector generation VG_VAL for the full-activation vector FACT1_TKn in a similar manner. For example, the first processing circuit 110 may independently generate key vectors KEY1_TKn_H1 to KEY1_TKn_HN, and may independently generate value vectors VAL1_TKn_H1 to VAL1_TKn_HN.

In some example embodiments, a key vector KEYi_TKj_Hh may refer to a key vector which corresponds to the j-th token TKj and is generated in the h-th head related to the i-th decoder layer DLi.

In some example embodiments, a value vector VALi_TKj_Hh may refer to a value vector which corresponds to the j-th token TKj and is generated in the h-th head related to the i-th decoder layer DLi.

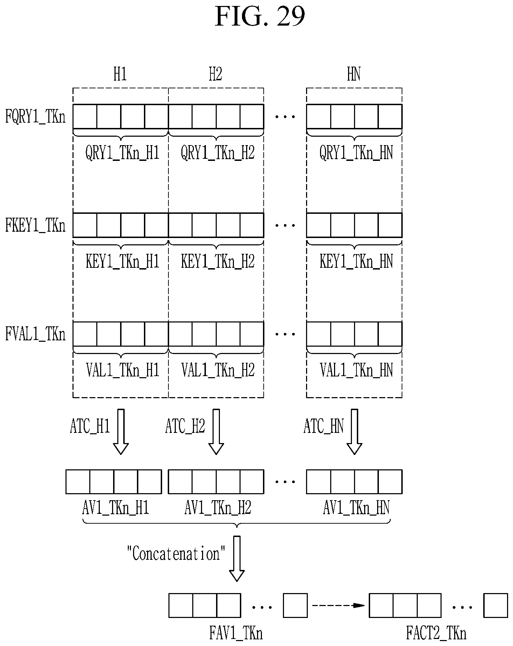

FIG. 29 is a drawing illustrating the attention calculation of FIG. 26. Referring to FIGS. 1 to 17 and FIGS. 25 to 29, the second processing circuit 120 may perform the attention calculation ATC_H1 based on the query vector QRY1_TKn_H1, the key vector KEY1_TKn_H1, and/or the value vector VAL1_TKn_H1. In other words, the second processing circuit 120 may generate an attention vector AV1_TKn_H1 based on the query vector QRY1_TKn_H1, the key vector KEY1_TKn_H1, and/or the value vector VAL1_TKn_H1.

More specifically, the second processing circuit 120 may calculate a plurality of attention scores corresponding to the key vector KEY1_TKn_H1, based on the key vector KEY1_TKn_H1 and the preceding key vectors (e.g., the key vectors KEY1_TK1_H1 to KEY1_TKn-1_H1). Thereafter, the second processing circuit 120 may generate the attention vector AV1_TKn_H1 based on a result obtained by accumulating the value vector VAL1_TKn_H1 and preceding value vectors (e.g., the value vectors VAL1_TK1_H1 to VAL1_TKn-1_H1) based on the plurality of attention scores. A specific manner in which the attention calculation ATC_H1 related to the first head is performed is similar to the attention calculation ATC described above with reference to FIGS. 1 to 17, and thus a detailed description thereof will not be made.

In this manner, the second processing circuit 120 may independently perform the attention calculations ATC_H1 to ATC_HN. For example, the second processing circuit 120 may calculate the attention vectors AV1_TKn_H1 to AV1_TKn_HN based on different processing core from each other; or the second processing circuit 120 may calculate the attention vectors AV1_TKn_H1 to AV1_TKn_HN at different time from each other.

Thereafter, the transformer TF may concatenate the attention vectors AV1_TKn_H1 to AV1_TKn_HN. For example, the transformer TF may generate a full-attention vector FAV1_TKn by concatenating the attention vectors AV1_TKn_H1 to AV1_TKn_HN. Thereafter, the transformer TF may generate the full-activation vector FACT2_TKn based on the full-attention vector FAV1_TKn.

FIG. 30 is a drawing illustrating the transformer acceleration device of FIG. 1 or FIG. 18 implemented according to some example embodiments. Referring to FIGS. 1 to 30, the transformer acceleration device 100 and/or the transformer acceleration device 200 may be implemented as a transformer acceleration device 300 of FIG. 30.

The transformer acceleration device 300 may include a first processing circuit 310, a second processing circuit 320, a task scheduler 330, an interface circuit 340, a memory controller 350, and/or a memory device 360. The configurations and operations of the first processing circuit 310, the second processing circuit 320, the task scheduler 330, the interface circuit 340, the memory controller 350, and the memory device 360 are similar to those described above with reference to FIGS. 1 to 29, and thus a detailed description thereof will not be made.

The memory device 360 may include a first memory bank array MBA1 and/or a second memory bank array MBA2. Each, or one or more, of the first memory bank array MBA1 and the second memory bank array MBA2 may include a plurality of memory banks. Each, or one or more, of the plurality of memory banks included in the first memory bank array MBA1 and the second memory bank array MBA2 may operate independently each other.

In some example embodiments, the plurality of memory banks included in the first memory bank array MBA1 and the plurality of memory banks included in the second memory bank array MBA2 may not overlap with each other.

The task scheduler 330 may dispersedly allocate data likely to be accessed simultaneously by the first processing circuit 310 and the second processing circuit 320, to different memory bank array.

The memory device 360 may dispersedly store data likely to be accessed simultaneously by the first processing circuit 310 and the second processing circuit 320, to different memory bank arrays. In other words, the first memory bank array MBA1 and the second memory bank array MBA2 may dispersedly store a plurality of weight matrices and a plurality of key-value vector pairs.

For a more detailed example, similar to that described above with reference to FIGS. 1 to 29, the first memory bank array MBA1 may store a plurality of weight matrices related to a first layer group LG1; and the second memory bank array MBA2 may store a plurality of key-value vector pairs KVP related to the first layer group LG1. The second memory bank array MBA2 may store a plurality of weight matrices related to a second layer group LG2; and the first memory bank array MBA1 may store a plurality of key-value vector pairs KVP related to the second layer group LG2. In this case, simultaneous access of the first processing circuit 310 and the second processing circuit 320 to one memory bank may be reduced, or prevented, which may improve the efficiency of operation of the transformer acceleration device 300.

The memory controller 350 may dispersedly store the plurality of key-value vector pairs KVP related to the second layer group LG2 in the first memory bank array MBA1. For example, the memory controller 350 may dispersedly store the plurality of key-value vector pairs KVP related to the second layer group LG2 in the plurality of memory banks included in the first memory bank array MBA1 with interleaving scheme.

The memory controller 350 may dispersedly store the plurality of key-value vector pairs KVP related to the first layer group LG1 in the second memory bank array MBA2. For example, the memory controller 350 may dispersedly store the plurality of key-value vector pairs KVP related to the first layer group LG1 in the plurality of memory banks included in the second memory bank array MBA2 with interleaving scheme.

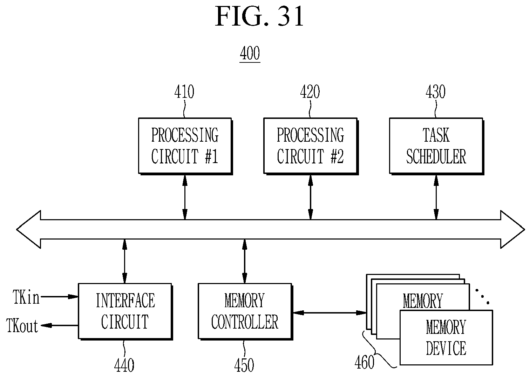

FIG. 31 is a drawing illustrating the transformer acceleration device of FIG. 1 or FIG. 18 implemented according to some example embodiments. Referring to FIGS. 1 to 29 and FIG. 31, the transformer acceleration device 100 or the transformer acceleration device 200 may be implemented as a transformer acceleration device 400 of FIG. 31.

The transformer acceleration device 400 may include a first processing circuit 410, a second processing circuit 420, a task scheduler 430, an interface circuit 440, a memory controller 450, and/or a plurality of memory devices 460. The configurations and operations of the first processing circuit 410, the second processing circuit 420, the task scheduler 430, the interface circuit 440, the memory controller 450, and the memory devices 460 are similar to those described above with reference to FIGS. 1 to 29, and thus a detailed description thereof will not be made.

The memory controller 450 may control the plurality of memory devices 460. For example, the memory controller 450 may perform read operations and write operations for the plurality of memory devices 460.

Each, or one or more, of the plurality of memory devices 460 may include a plurality of memory banks.

In some example embodiments, the task scheduler 430 may classify the memory banks included in the plurality of memory devices 460 into a first memory bank array MBA1 and a second memory bank array MBA2. The memory controller 450 may store a plurality of weight matrices and a plurality of key-value vector pairs in the first memory bank array MBA1 and the second memory bank array MBA2 dispersedly. However, example embodiments are not limited to a specific manner in which the task scheduler 430 classifies the memory banks included in the plurality of memory devices 460.

In some example embodiments, each of the plurality of memory devices 460 may store data for the operations decoder layers DL related to different heads. For example, the plurality of memory devices 460 may be implemented to store weight matrices related to first to N-th heads, respectively; and may be implemented to store key-value vector pairs related to the first to N-th heads, respectively. In this case, each, or one or more, memory device 460 may include at least two memory bank arrays, and may dispersedly store the weight matrices and the key-value vector pairs related to each decoder layer in the at least two memory bank arrays.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU) , an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

Embodiments are set out in the following Clauses:
Clause 1. An operation method of a transformer acceleration device including a plurality of memory bank arrays, the method comprising:
   generating a first activation vector based on a first input token;
   reading a first plurality of weight matrices from a first memory bank array, the first memory bank array being a memory bank array of the plurality of memory bank arrays;
   generating a first key-value vector pair based on the first plurality of weight matrices and the first activation vector;
   storing the first key-value vector pair in a second memory bank array, the second memory bank array being a memory bank array, of the plurality of memory bank arrays, different from the first memory bank array;
   generating a second activation vector based on the first key-value vector pair; and
   generating a first output token corresponding to the first input token based on the second activation vector.
Clause 2. The operation method of Clause 1, wherein the generating the second activation vector comprises:
   reading, from the second memory bank array, a plurality of preceding key-value vector pairs corresponding to a plurality of preceding tokens for the first input token, respectively; and
   generating the second activation vector by performing first attention calculation based on the plurality of preceding key-value vector pairs and the first key-value vector pair.
Clause 3. The operation method of Clause 2, further comprising:
   generating a third activation vector based on the first output token;
   reading the first plurality of weight matrices from the first memory bank array;
   generating a third key-value vector pair based on the first plurality of weight matrices and the third activation vector;
   storing the third key-value vector pair in the second memory bank array;
   generating a fourth activation vector based on the third key-value vector pair; and
   generating a second output token corresponding to the first output token based on the fourth activation vector.
Clause 4. The operation method of Clause 3, wherein the generating the fourth activation vector comprises:
   reading, from the second memory bank array, the plurality of preceding key-value vector pairs and the first key-value vector pair; and
   generating the fourth activation vector by performing second attention calculation based on the plurality of preceding key-value vector pairs, the first key-value vector pair, and the third key-value vector pair.
Clause 5. The operation method of any of Clauses 1-4, wherein the generating the first output token comprises:
   reading a second plurality of weight matrices from the second memory bank array;
   generating a second key-value vector pair based on the second plurality of weight matrices and the second activation vector;
   storing the second key-value vector pair in the first memory bank array;
   generating a fifth activation vector based on the second key-value vector pair; and
   generating the first output token based on the fifth activation vector.

Some example embodiments for carrying out the inventive concepts have been described above. The inventive concepts may include not only the above-described embodiments but also embodiments which can be obtained by simply changing the designs or easily changing the above-described example embodiments. Also, the inventive concepts may include technologies which can be implemented by easily modifying the example embodiments. Therefore, the scope of the inventive concepts should not be limited to the above-described example embodiments, and should be defined by the following claims and equivalents of the claims of the inventive concepts.

## Claims

1. A transformer acceleration device configured to execute a transformer comprising a first plurality of decoder layers and a second plurality of decoder layers, the transformer acceleration device comprising:
a first memory bank array configured to store a first plurality of weight matrices corresponding to the first plurality of decoder layers and a first plurality of key-value vector pairs corresponding to the second plurality of decoder layers; and
a second memory bank array configured to store a second plurality of weight matrices corresponding to the second plurality of decoder layers, and a second plurality of key-value vector pairs corresponding to the first plurality of decoder layers.

2. The transformer acceleration device of claim 1, further comprising a first processing circuit configured to:
calculate the first plurality of key-value vector pairs based on the first plurality of weight matrices; and
calculate the second plurality of key-value vector pairs based on the second plurality of weight matrices.

3. The transformer acceleration device of claim 1 or 2, further comprising a second processing circuit configured to:
perform attention calculation for the second plurality of decoder layers based on the first plurality of key-value vector pairs; and
perform attention calculation for the first plurality of decoder layers based on the second plurality of key-value vector pairs.

4. The transformer acceleration device of any preceding claim, wherein:
a number of the first plurality of decoder layers and a number of the second plurality of decoder layers correspond to each other.

5. The transformer acceleration device of any preceding claim, wherein:
an order of the first plurality of decoder layers and the second plurality of decoder layers is alternating with each other.

6. The transformer acceleration device of any preceding claim, wherein:
a first capacity of the first plurality of weight matrices and the first plurality of key-value vector pairs corresponds to a second capacity of the second plurality of weight matrices and the second plurality of key-value vector pairs.

7. The transformer acceleration device of any preceding claim, wherein:
the first plurality of key-value vector pairs comprises:
a first plurality of key vectors corresponding to a first token stream provided from an external device; and
a first plurality of value vectors corresponding to the first token stream, and the second plurality of key-value vector pairs comprises:
a second plurality of key vectors corresponding to the first token stream; and
a second plurality of value vectors corresponding to the first token stream.

8. The transformer acceleration device of claim 7, wherein:
the first plurality of key-value vector pairs further comprises:
a third plurality of key vectors corresponding to a second token stream provided from the external device; and
a third plurality of value vectors corresponding to the second token stream, and the second plurality of key-value vector pairs further comprises:
a fourth plurality of key vectors corresponding to the second token stream; and
a fourth plurality of value vectors corresponding to the second token stream.

9. The transformer acceleration device of claim 7 or claim 8, wherein:
each of the first plurality of key vectors, the first plurality of value vectors, the second plurality of key vectors, and second plurality of value vectors has a smaller capacity than that of one memory cell row of memory banks included in the first memory bank array and the second memory bank array.

10. A transformer acceleration device configured to operate based on a first activation vector corresponding to a first input token, the transformer acceleration device comprising:
a first memory bank array configured to store a first plurality of weight matrices;
a second memory bank array configured to store a first plurality of preceding key-value vector pairs corresponding to a first plurality of preceding tokens for the first input token;
a first processing circuit configured to generate a first key-value vector pair based on the first activation vector and the first plurality of weight matrices; and
a second processing circuit configured to perform first attention calculation based on the first key-value vector pair and the first plurality of preceding key-value vector pairs.

11. The transformer acceleration device of claim 10, wherein:
the first key-value vector pair comprises a first key vector and a first value vector,
the first plurality of preceding key-value vector pairs comprises a first plurality of preceding key vectors and a first plurality of preceding value vectors, and
the second processing circuit is configured to:
generate a first plurality of attention scores respectively corresponding to the first key vector and the first plurality of preceding key vectors; and
generate a first attention vector by accumulating the first value vector and the first plurality of preceding value vectors based on the first plurality of attention scores.

12. The transformer acceleration device of claim 11, wherein the first processing circuit is further configured to store the first key vector and the first value vector in the second memory bank array.

13. The transformer acceleration device of claim 12, wherein:
the transformer acceleration device is further configured to operate based on a second activation vector, the second activation vector being generated based on the first attention vector,
the second memory bank array is further configured to store a second plurality of weight matrices,
the first memory bank array is further configured to store a second plurality of preceding key-value vector pairs corresponding to the first plurality of preceding tokens, respectively,
the first processing circuit is further configured to generate a second key-value vector pair based on the second activation vector and the second plurality of weight matrices, and
the second processing circuit is further configured to perform a second attention calculation based on the second key-value vector pair and the second plurality of preceding key-value vector pairs.

14. The transformer acceleration device of claim 13, wherein the second processing circuit is configured to store the second key-value vector pair in the first memory bank array.

15. The transformer acceleration device of any of claims 11-14, wherein the transformer acceleration device is further configured to generate a first output token corresponding to the first input token and the first plurality of preceding tokens based on the first attention vector.
